(19) Europäisches Patentamt
European Patent Office
Office européen des brevets

(11) **EP 1 927 499 B1**

(12) **EUROPEAN PATENT SPECIFICATION**

(45) Date of publication and mention
of the grant of the patent:
**06.01.2010 Bulletin 2010/01**

(51) Int Cl.:
***B60K 31/00*** *(2006.01)*

(21) Application number: **06124977.7**

(22) Date of filing: **29.11.2006**

(54) **Steering safety system**

Sicherheits-Lenksystem

Système de direction de sécurité

(84) Designated Contracting States:
**DE GB SE**

(43) Date of publication of application:
**04.06.2008 Bulletin 2008/23**

(73) Proprietor: **Ford Global Technologies, LLC**
**Dearborn, MI 48126 (US)**

(72) Inventors:
• **Eidehall, Andreas**
**414 65, Göteborg (SE)**

• **Pohl, Jochen**
**412 55, Göteborg (SE)**

(74) Representative: **Ekström, Nils**
**Albihns AB**
**P.O. Box 142**
**401 22 Göteborg (SE)**

(56) References cited:
**EP-A2- 0 738 647       US-A- 5 485 892**
**US-A1- 2004 145 238**

**Description**

**Field of the invention**

The present invention relates to steering safety systems for automobiles, for example to steering safety systems which are operable to sense road conditions and to apply steering forces for avoiding or mitigating collision events. Moreover, the present invention also relates to methods of sensing road conditions of automobiles, of identifying potential collision events and of applying collision avoidance or collision mitigation steering forces to steering arrangements of the automobiles. Moreover, the present invention also relates to software executable on computing hardware for implementing the aforesaid methods.

**Background of the invention**

In recent years, safety has been improved by employing passive safety features in automobiles; such passive safety features include, for example, seatbelts, and crumple zones operable to absorb kinetic energy during impact events. Moreover, safety has been further enhanced by employing active safety devices, for example, various types of air-bags. More recently, there has been interest for intelligent sensor safety systems for inclusion in automobiles, such intelligent sensor safety systems being operable to sense road conditions external to such automobiles and to apply automatically crash avoidance or crash mitigation measures when potential collision events are identified by analyzing the sensed road conditions.

A general technical problem encountered with such intelligent sensor safety systems is reliability of potential collision event detection. An incorrect analysis of road conditions can result in such a sensor safety system taking inappropriate action resulting in potentially a hazardous situation. In consequence, automobile manufacturers have been inclined to design intelligent sensor safety systems, for example active steering and braking safety systems, so that they are operable to intervene when there is little or no doubt regarding status of road conditions representing hazardous situations. However, such a cautious approach creates difficulties in that such intervention is potentially applied too late in many situations to avoid serious damage or injury from occurring.

In a published United States patent no. US 6, 873, 286, there is described a motor vehicle driving aid system. The system comprises detector devices operable to provide electrical signals indicative of a relative distance and relative speed of a motor vehicle with respect to a fixed or moving obstacle ahead thereof. The system further includes a processing and control unit coupled to the detector devices to receive detection signals therefrom, and also connected to brake actuators for outputting braking instructions thereto. In operation, the processing and control unit is arranged to activate the brake actuators to apply automatic emergency braking to the motor vehicle when the relative distance $d_R$ between the motor vehicle and an obstacle present ahead of the vehicle lies between a first predetermined limit value $d_F$ and a pre-selected intermediate value $d_E$. The first value $d_F$ corresponds to a minimum distance at which it is still possible to avoid a collision by braking.

The distance $d_E$ also represents a distance wherein, when less than the value $d_F$, it is no longer possible to avoid a collision event of the motor vehicle only by braking, thus requiring a lateral obstacle avoidance maneuver to be performed. Actuation of an obstacle avoidance maneuver is controlled in the motor vehicle by a steering actuator, for example an electric motor, coupled to a steering column of the vehicle; the steering actuator is controlled from a steering control unit. The control unit is operable to activate an obstacle avoidance function in an event that invoking the function is capable of avoiding a collision event from occurring.

The driving aid system is described as including a frontal microwave radar apparatus for sensing an obstacle in a path of travel of the vehicle. The microwave radar is arranged to perform a scanning function and, in particular, to generate a signal indicative of a relative speed $V_R$ and the relative distance $d_R$ between the motor vehicle and a potential object ahead thereof. The driving aid system also includes at least one video camera directed to an area ahead of the motor vehicle, and a series of lateral short-range radar systems and a pair of video cameras for monitoring rear-side areas of the vehicle, these rear-side areas being known as "blind spots". An option of employing lidar, namely "light direction and ranging", for obstacle detection is also disclosed.

The system is provided with a comprehensive set of sensors and complex signal processing apparatus in order to provide enhanced reliability of obstacle detection; such reliability is paramount when the system is operable to function automatically and potentially override control applied by a driver of the motor vehicle. However, despite such precautions to seek to achieve a high reliability of obstacle detection, there is still a risk of system malfunction or incorrect object detection which can potentially place lives of occupants of the motor vehicle in jeopardy.

It is envisaged that automobile manufacturer will provide in their future manufactured automobiles forward collision warning (FCW) and forward collision mitigation (FCM) systems. Such FCM and FCM systems employ microwave radar or lidar sensors to measure in operation distances and velocities of leading vehicles or similar types of object which could represent crash threats. Moreover, such systems are expected to include computing hardware operable to execute decision algorithms for determining whether or not leading vehicles or objects represent a threat and initiate autonomous braking. Sensor arrangements such as cameras and wide-angle radars in combination with electric power assisted steering (EPAS) and associated data processing systems are capable of potentially providing collision avoidance by autonomous steering intervention. Moreover, algorithms for executing decisions regarding steering are anticipated to be more complex than corresponding algorithms for executing autonomous braking. Algorithms for executing decisions regarding steering are capable of either resulting in a collision when functioning incorrectly or avoiding a collision when functioning correctly, whereas braking systems are capable of generally mitigating collisions. Thus, incorrect autonomous decisions on steering are more potentially dangerous than incorrect autonomous decisions regarding braking. Moreover, it is envisaged that a maximum steering force required in autonomous crash avoidance will not be limited by physical vehicle characteristics but defined by customer requirements or legal regulations.

In a published United States patent application no. US 2005/0090955, there are described methods of performing threat assessment of objects for vehicles. The methods involve determining kinematics of the vehicles and of the objects. Moreover, the methods include computing brake threat numbers ($BTNs$) and steering threat numbers ($STNs$). For example, a threat assessment system operable to execute the methods comprises at least one object detection sensor for generating at least one object detection signal, and a controller coupled to the at least one object detection sensor. The controller is operable to compute a braking threat number ($BTN$) and a steering threat number ($STN$) in response to processing the at least one object detection signal. Moreover, the controller is operable to determine a threat of the at least one object in response to the braking threat number ($BTN$) and the steering threat number ($STN$).

In a published scientific paper "Monte Carlo Road Safety Reasoning", Broadhurst et al., Carnegie Mellon University, there is described a framework for reasoning future motions of multiple objects in a road scene. In the framework, future paths of all objects in the scene are computed and their danger to a road vehicle traveling in respect of the road scene are assessed. Monte Carlo path planning is alleged to be used to generate a probability distribution for possible motions of every object in the scene. The framework is applicable to control the road vehicle, or to display warnings to its driver.

Document EP 0 738 647 describes a power steering device which inhibits steering in case an obstacle is detected in the steering direction including a sensor arrangement operable to interrogate a sensing region external to the automobile and generate corresponding signals and a processing arrangement operable to receive the sensor signals and to compute positions of one or more potential hazardous objects.

Thus, the present invention is concerned with a technical problem of providing advanced steering safety systems which are operable to provide more reliable steering intervention in potential collision situations.

## Summary of the invention

An object of the present invention is to provide a more advanced steering safety system which is capable of providing more reliable steering intervention in a potential collision event.

According to a first aspect of the present invention, there is provided a steering safety system operable to apply a steering torque to a steering arrangement of an automobile in response to a potential collision event involving one or more potentially hazardous objects being identified, the system including:

(a) a sensor arrangement (30) operable to interrogate a sensing region (40) external to the automobile (20) and generate corresponding sensor signals; and
(b) a processing arrangement (60) operable to receive the sensor signals and to compute positions and relative velocities of said one or more potentially hazardous objects (230) in the sensing region (40) therefrom, and to compute a value representative of a steering torque required to be applied to steer said automobile (20) in a direction to avoid said hazardous objects, to retrieve a value representative of maximum torque available to steer said automobile (20) in said direction, and to compare the value representative of the maximum torque available with the value representative of the steering torque required to avoid said hazardous object, and to decide how to intervene in response to said comparison.

The invention is of advantage in that computation of the required steering torque in the processing arrangement in response to receiving the sensor signals and comparing the required steering torque with a retrieved value representative of maximum torque available to steer said automobile (20) in said direction is susceptible to improving reliability of steering intervention in response to a potential collision event. In particular, by comparing a value representative of the required steering torque with a value representative of a maximum torque available, a very adequate measure for deciding whether intervention should be allowed or nor, and for, in the event intervention is allowed, timing of intervention, is obtained.

In order to obtain increased safety by use of active steering safety systems, which are designed to apply additional steering torque under certain traffic situations in order to avoid or reduce the risk for collisions, it is important to intervene by application of steering torque in a correct manner. Too early application of steering torque will result in a vehicle having an unreliable running characteristic, while too late application will lead to jerky behaviour or possibly that accidents can not be avoided. Furthermore, it is of importance not to intervene in the event intervention will not lead to avoidance of a collision, since under such circumstances it is safer to let the driver have complete control of the vehicle without any intervention by application of additional steering torque.

By comparing a measure of a value representative of a maximum torque available $T_{MAX}$ with a value representative of a required steering torque $T_S$, which if applied would ensure avoidance of a collision a suitable measure for decisions regarding intervention by the steering safety system is obtained. The comparison is preferably made by forming a ratio STN of a calculated value indicating the required steering torque with a retrieved value indicating the maximum torque available, that is $STN = T_S / T_{MAX}$. The comparison of the values representative of the maximum steering torque and the steering torque may be formed by other representations of these torques than the formation of a linear quota $STN = T_S / T_{MAX}$. Examples of other suitable representations of the torques may be the square of the torques $(T_S / T_{MAX})^2$, the square root of the torques $(T_S / T_{MAX})^{1/2}$ or any other functions f,g of the torques $(f(T_s)/g(T_{MAX})$ which allows for estimation of the relative magnitude of the maximum torque available with the steering torque required. A requirement of the functions f and g are that they do not contain any singular points and that they are smooth functions in a relevant interval for the torques. Furthermore they must both be continuously increasing or both continuously decreasing in the relevant interval of the torques.

The steering torque required to avoid the hazardous objects may be calculated in accordance with known principles, as are explained in for instance Wong, J.Y., Theory of ground vehicles (1993), John Wiley & Sons, Inc.

The maximum available steering torque may be retrieved from a memory cell, a map stored in the processing arrangement or calculated. The maximum available steering torque, may be a limit set by legal requirement that additional steering torque applied by safety systems should not exceed a certain limit. The maximum available steering torque, may alternatively be a limit corresponding to the maximum torque output from a servo motor. Alternatively, the maximum available steering torque may be selected such that a standard driver should always be capable of overriding the steering torque applied. Sensor arrangements may be provided such that an adaptable upper limit is set, which adaptable upper limit is dependent on the action taken by the driver under the event. The sensor arrangement may typically be aware of whether the driver is steering in the opposite direction of the applied torque or not.

In preferred embodiments of the invention, the steering safety system may include the following further features, alone or in combination as is evident from the dependent claims:

- the steering safety system may be arranged to not apply any additional steering torque in the event said steering torque required exceeds said maximum torque available to avoid said hazardous object;
- the steering safety system may be arranged to compute a ratio value representative of a ratio of said required steering torque to said maximum torque available.
- the steering safety system may be arranged to not apply any steering torque in the event said ratio value is below a first threshold value;
- the steering safety system may be arranged to intervene in the event said ratio value is above a first threshold value, and /or
- the steering safety system may be arranged to intervene by applying a steering torque in order to avoid said hazardous objects.

In preferred embodiments of the invention intervention is made by application of a steering torque by the steering safety system when the ratio STN of a calculated value indicating the required steering torque with a retrieved value indicating the maximum torque available exceeds a first threshold level, that is $STN = T_S / T_{MAX} > T_1$. No intervention is made if the ratio is below this first threshold value or if the required steering torque exceeds the maximum torque available. The first threshold value is suitable selected between 0,6 and 0,95, preferably between 0,75 and 0,90.

In an other embodiment the steering safety system may furthermore include:

(b1) a processing arrangement operable to receive the sensor signals and to compute positions and relative velocities of the one or more potentially hazardous objects in the sensing region therefrom, and to compute therefrom a relatively safest direction ($F_{lane}$) along which the automobile is capable of traveling in operation to try to avoid the one or more potentially hazardous objects, to compute a steering torque required to be applied to steer the automobile in the safest direction ($F_{lane}$), to compute a maximum torque available to steer the automobile in the safest direction ($F_{lane}$), to compute a ratio value representative of a ratio of the required steering torque to the maximum torque available, and to compute whether or not to intervene to apply the steering torque to steer the automobile in the safest direction ($F_{lane}$) in response to the ratio value.

As an example, the safest direction may be selection between avoiding a potentially hazardous object by turning left or turning right in order to pass the object on different sides of the vehicle. The selection may be based on assigning threat levels on the respective side of the potentially hazardous object. The treat levels may be assessed by consideration of future trajectories of the hazardous objects.

In such an embodiment the steering safety system, the processing arrangement is operable to compute future trajectories of the one or more potentially hazardous objects potentially obstructing said safest direction ($F_{lane}$), the processing arrangement being operable to apply via the steering arrangement the steering torque in the potential collision event to steer a direction of travel of the automobile towards the safest direction ($F_{lane}$). The system is thereby capable of applying a steering torque to avoid an immediate potential collision event and also a future evolving potential collision event.

Preferably, in the steering safety system, the sensor arrangement comprises a first sensor assembly operable to emit radiation towards the sensing region and receive corresponding reflected radiation therefrom, and a second sensor assembly operable to image the sensing region, the processing arrangement being operable to associate sensed signals corresponding to the one or more potentially hazardous objects received from the first and second sensor assemblies and to associate a hazard risk for each of the one or more potentially hazardous objects, wherein the processing arrangement is operable to compute a portion of the safest direction ($F_{lane}$) which is potentially unobstructed as a function of the hazard risks of the one or more potentially hazardous objects. Computation of collision hazard represented by each of the one or more potentially hazardous objects is capable of enabling a most appropriate safest direction ($F_{lane}$) to be selected by the system for reducing or avoiding collision damage.

Preferably, the steering safety system is operable when the automobile is traveling at a velocity greater than a first threshold velocity. Such a first threshold enables automatic braking to be employed as a sole measure of autonomous crash mitigation or avoidance at lower speeds.

Preferably, in the steering safety system, the processing arrangement is operable to limit the steering force to an upper limit, the upper limit being less than a torque applicable by a driver of the automobile such that the driver is capable of overriding the steering torque applied by the system when in operation. Limiting the torque that the system is capable of enabling the driver to override the system in a very rare event that the system has misinterpreted a road situation present in the sensing region, thereby improving driver safety.

According to a second aspect of the invention, there is provided a method of applying in a steering safety system a steering torque to a steering arrangement of an automobile in response to a potential collision event involving one or more potentially hazardous objects being identified, the method including steps of:

(a) interrogating using a sensor arrangement (30) a sensing region (40) external to the automobile (20) and generating corresponding sensor signals;
(b) receiving in a processing arrangement (60) the sensor signals and computing positions and relative velocities of one or more potentially hazardous objects (230) in the sensing region (40) therefrom,
(c) computing a steering torque required to be applied to steer said automobile (20) in a direction to avoid said hazardous objects;
(d) computing a maximum torque available to steer said automobile (20) in said direction;
(e) comparing the value representative of the maximum torque available with the value representative of the steering torque required to avoid said hazardous object,
(f) and deciding how to intervene in response to said comparison.

In further preferred embodiments, the following additional method steps may be performed alone or in combinations which are evident from the dependent claims:

- said steering safety system may be prevented from applying steering torque in the event said steering torque required exceeds said maximum torque available to avoid said hazardous object;
- said steering safety may compute a ratio value representative of a ratio of said required steering torque to said maximum torque available;
- said steering safety system may be prevented from applying steering torque in the event said ratio value is below a first threshold value;
- said steering safety may intervene in the event said ratio value is above a first threshold value; and/or
- said steering safety system may intervene by applying a steering torque in order to avoid said hazardous objects.

In another embodiment, the following method steps are performed:

(a) interrogating using a sensor arrangement a sensing region external to the automobile and generating corresponding sensor signals;
(b) receiving in a processing arrangement the sensor signals and computing positions and relative velocities of the one or more potentially hazardous objects in the sensing region therefrom, and computing therefrom a relatively safest direction ($F_{lane}$) in which the automobile is capable of traveling in operation with minimal risk of collision;

(c) computing a steering torque required to be applied to steer the automobile in the safest direction ($F_{lane}$);

(d) computing a maximum torque available to steer the automobile in the safest direction ($F_{lane}$);

(e) computing a ratio value representative of a ratio of the required steering torque to the maximum torque available; and

(f) computing whether or not to intervene to apply the steering torque to steer the automobile in the safest direction ($F_{lane}$) in response to the ratio value.

Preferably, the method in step (a) includes steps of:

(g) emitting from a first sensor assembly of the sensor arrangement radiation towards the sensing region and receiving corresponding reflected radiation therefrom, and

(h) imaging from a second sensor assembly of the sensor arrangement the sensing region,

and wherein the method in step (b) includes steps of:

(i) associating in the processing arrangement sensed signals corresponding to the one or more potentially hazardous objects received from the first and second sensor assemblies, and associating a hazard risk ($K_i$) for each of the one or more potentially hazardous objects, and

(j) computing in the processing arrangement the portion of the safest direction ($F_{lane}$) which is potentially unobstructed as a function of the hazard risks of the one or more potentially hazardous objects.

According to a third aspect of the invention, there is provided a software product on a data carrier, the software product being executable on computing hardware to implement the method according to the second aspect of the invention.

According to a fourth aspect of the invention, there is provided an automobile including a steering safety system according to the first aspect of the invention.

The expression "automobile" is to be construed to include: personal motor vehicles, cars, vans, trucks, lorries, buses, motorcycles, scooters and any other type of propelled road vehicle.

It will be appreciated that features of the invention are susceptible to being combined in any combination without departing from the scope of the invention as defined by the accompanying claims.

**Description of the diagrams**

Embodiments of the invention will now be described, by way of example only, with reference to the following diagrams wherein:

Figure 1    is a plan-view illustration of the automobile according to the present invention;

Figure 2    is a plan-view of a section of road, turnpike or highway including an automobile configured to function pursuant to the present invention;

Figure 3    is a graph illustrating velocity ranges in which an automating braking system and an automatic steering system included in the automobile of Figure 1 are configured to function;

Figure 4    is a flow chart of an algorithm executable in a data processing unit of the automatic steering and braking systems of the automobile of Figure 1 for implementing the present invention;

Figure 5    is a first scenario in which the present invention is susceptible to being employed;

Figure 6    is a second set of scenarios in which the present invention is susceptible to being employed;

Figure 7    is a third scenario in which the present invention is susceptible to being employed; and

Figure 8    is a fourth scenario in which the present invention is susceptible to being employed.

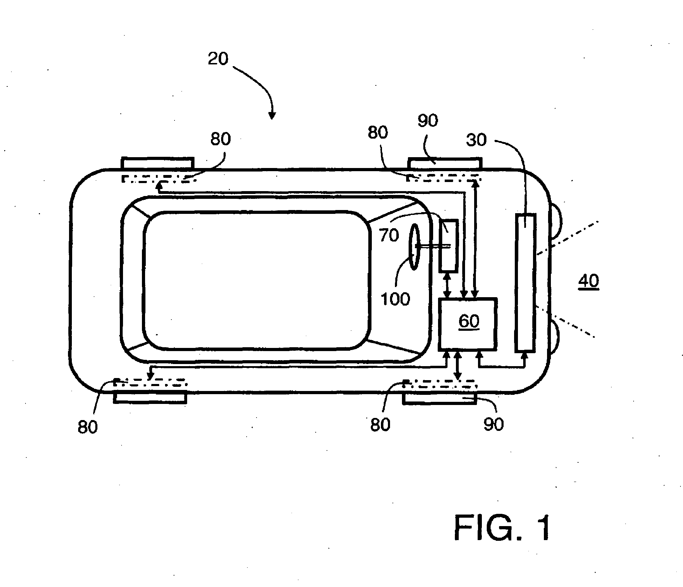

In Figures 1 to 8, numerals are included to identify features in conjunction with the following description of embodiments of the invention. The numerals are included underlined when spatially positioned within features to which they relate. Moreover, the numerals when not underlined are linked by lines which identify features to which the numerals relate. Furthermore, numerals are linked by arrows when they are used to indicate a complete component part or system.

**Description of embodiments of the invention**

In overview, the present invention employs forward collision warning (FCW) and forward collision mitigation (FCM). Moreover, the present invention is operable to employ a decision algorithm implemented either in dedicated hardware, as software executable on computing hardware, or a mixture of such hardware and software.

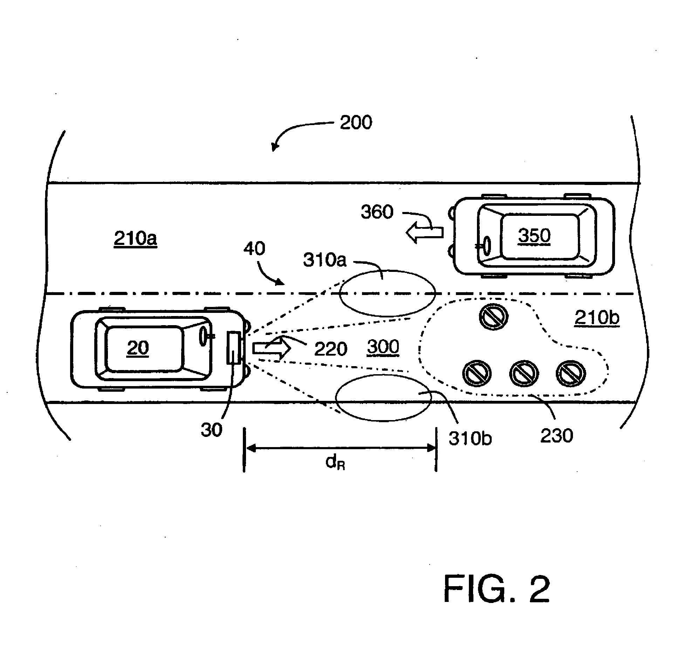

Referring to Figure 1, there is shown an automobile indicated generally by 20. At a front region of the automobile 20, there is included a sensor arrangement 30 comprising one or more sensors for sensing in a sensing region indicated generally by 40 in front of the automobile 20. Additional parts included in the automobile 20 comprise a data processing unit 60, a steering arrangement 70 and one or more brake units 80 associated with wheels of the automobile 20, the one or more brake units 80 being operable to reduce velocity of the automobile 20 when applied; the data processing unit 60 is also conveniently referred to as being a "data processing arrangement". An engine operable to generate motive power, and a power transmission coupled between the engine and the wheels of the automobile 20 are also included in the automobile 20 but not shown in Figures 1 and 2 for drawing simplicity. In a potential crash scenario, the steering force applied to the front wheels 90 is potentially capable of providing autonomous crash avoidance by steering as will be elucidated in more detail later. Additionally, the data processing unit 60 is coupled to the aforesaid one or more brake units 80 for autonomously applying braking forces to the automobile 20 in a potential crash scenario as will be elucidated later.

In Figure 2, there is shown a section of road, motorway or similar indicated generally by 200. The section 10 comprises first and second lanes 210a, 210b respectively. The automobile 20 is operable to travel in a forward direction denoted by an arrow 220 along the second lane 210b.

In normal safe driving conditions, the sensing region 40 will be devoid of one or more potentially hazardous objects 230 present in the forward direction 220 of travel of the automobile 20, although one or more peripheral objects are potentially present at left-hand and right-hand side peripheral regions 240a, 240b respectively of the sensing region 40 as illustrated, such peripheral objects not representing a hazard to the automobile 20. The sensor arrangement 30 includes a first sensor assembly operable:

(a) to emit radiation towards the sensing region 40 including the one or more potentially hazardous objects 230 which are potentially present in less safe driving conditions;
(b) to sense such radiation reflected from the one or more objects 230; and
(c) for generating a corresponding first set of sensor signals.

Beneficially, the first sensor assembly includes an angularly scanned sensor or a sensor which is capable of providing angular discrimination between the potentially hazardous one or more objects 230 as well as sensing their closing velocities $V_{Ci}$, for example by way of Doppler frequency shift. More beneficially, the first sensor assembly is implemented to include at least one of: an angularly-discriminating infra-red (IR) light direction and ranging (lidar), an angularly-discriminating microwave radio direction and ranging (radar). The sensor arrangement 30 further comprises a second sensor assembly beneficially comprising one or more video cameras for providing a second set of sensor signals conveying an optical image of the aforesaid sensing region 40. Optionally, the sensor arrangement 30 is further complemented with other types of sensors, for example ultrasonic sensors operable in a radar-manner to scan the region 40. Optionally, the one or more video cameras are operable to sense in one or more of: human visible optical spectrum, infra-red (IR) optical spectrum; the IR spectrum is of especial benefit for night driving and misty or foggy conditions. As will be elucidated later, the data processing unit 60 is operable to process the first and second sets of signals to identify therefrom signals corresponding to specific objects 230, wherein the first set of signals are most useful in determining the aforesaid closing velocity $V_{Ci}$ and distance or position $d_{Ri}$, and the second set of signals are most useful:

(a) in providing confirmation regarding the one or more objects 230 identified from processing the first set of signals; and also
(b) deriving a measure of spatial extents of the one or more objects 230 identified from processing the first set of signals.

For example, with regard to spatial extent, a sheet of aluminium foil blowing about on the section of road 200 is susceptible to potentially providing stronger microwave reflected signals than a concrete block fallen from a truck onto the section of road 200; the concrete block represents a potentially more dangerous impact hazard to the automobile 20 than the aluminium foil. In executing risk assessment, the data processing unit 60 requires further information regarding the nature of the one or more objects 230, namely a collision hazard represented by the one or more objects 230; use of the first and second sets of signals provides this further information such that each of the one or more objects 230 has associated therewith in the data processing unit 60 a corresponding hazard assessment number $K_i$ indicative of a risk presented by the object, there being $n$ objects in the sensing region 40, each object being individually denoted using an integer index $i$ such that $i \le n$.

The data processing unit 60 is beneficially implemented in application-specific digital hardware and/or using computing hardware operable to execute software. Moreover, the data processing unit 60 is coupled to the sensor arrangement 30 for receiving the aforesaid first and second sets of sensor signals therefrom. Furthermore, the data processing unit 60 is coupled to one or more actuators included in the steering arrangement 70, for example one or more electric motors, operable to generate a steering torque to orientate front wheels 90 of the automobile 20; the steering torque is also felt in operation by a driver at a steering wheel 100 of the automobile 20 and beneficially provides a tactile indication of a potential risk represented by the one or more objects 230. In a potential crash scenario, the steering torque applied to the front wheels 90 is potentially capable of providing autonomous crash avoidance as will be elucidated in more detail later. Additionally, the data processing unit 60 is coupled to the aforesaid one or more brake units 80 for autonomously applying braking forces to the automobile 20 in a potential crash scenario as will also be further elucidated later.

In operation, the data processing unit 60 computes from the first set of sensor signals angular positions or distances $d_{Ri}$ and closing velocities $V_{Ci}$ of the one or more potentially hazardous objects 230 in respect of the sensor arrangement 30. The processing arrangement 60 analyses the positions or distances $d_{Ri}$ and the closing velocities $V_{Ci}$ to determine:

The data processing unit 60 is operable to implement a series of steps of:

(a) identifying the one or more objects 230 which represent collision risks;
(b) estimating a value of a required steering torque $T_s$ necessary to avoid the one or more objects 230;
(c) computing a maximum available torque $T_{ma}$ which can be applied to steer away from the one or more objects 230 to avoid collision therewith;
(d) computing a ratio of the maximum available torque $T_{ma}$ ad the required steering torque $T_s$; and
(e) determining how to intervene by applying a steering torque to the steering arrangement 70 in response to a value of the computed ratio.

Step (a) is preferably implemented as elucidated in the foregoing. Optionally, the data processing unit 60 is hindered from intervening when the maximum available torque $T_{ma}$ is less than the required steering torque $T_s$ necessary to avoid the one or more objects 230. Moreover, the data processing unit 60 is hindered from intervening when the required steering torque $T_s$ is at least one of: greater than an upper torque threshold, below a lower torque threshold.

The required steering torque may be calculated using a simulation model of the vehicle. A thorough description of how to implement a model is found in Wong, J.Y., Theory of ground vehicles (1993), John Wiley & Sons, Inc. In stead of simulation, maps or tables providing information of necessary torque to avoid a certain object, which future trajectory may be determined, when travelling at a known speed relative to the object, may be used.

The maximum available torque may be retrieved from a memory cell, a map stored in the processing arrangement or calculated. The maximum available steering torque, may be a limit set by legal requirement that additional steering torque applied by safety systems should not exceed a certain limit. The maximum available steering torque, may alternatively be a limit corresponding to the maximum torque output from a servo motor. Alternatively, the maximum available steering torque may be selected such that a standard driver should always be capable of overriding the sttering torque applied. Sensor arrangements may be provided such that an adaptable upper limit is set, which adaptable upper limit is dependent on the action taken by the driver under the event. The sensor arrangement may typically be aware of whether the driver is steering in the opposite direction of the applied torque or not.

The intervention determined under step e) may be any or a combination of the events defined below:

- the steering safety system may be arranged to not apply any additional steering torque in the event said steering torque required exceeds said maximum torque available to avoid said hazardous object;
- the steering safety system may be arranged to compute a ratio value representative of a ratio of said required steering torque to said maximum torque available.
- the steering safety system may be arranged to not apply any steering torque in the event said ratio value is below a first threshold value;
- the steering safety system may be arranged to intervene in the event said ratio value is above a first threshold value, and /or
- the steering safety system may be arranged to intervene by applying a steering torque in order to avoid said hazardous objects.

In preferred embodiments of the invention intervention is made by application of a steering torque by the steering safety system when the ratio STN of a calculated value indicating the required steering torque with a retrieved value indicating the maximum torque available execeeds a first threshold level, that is STN = $T_S / T_{MAX}$ > $T_1$. No intervention is made if the ratio is below this first threshold value or if the required steering torque exceeds the maximum torque available. The first threshold value is suitable selected between 0,6 and 0,95, preferably between 0,75 and 0,90.

The aforementioned automatic steering function is implemented by the data processing unit 60 by sending instructions to the aforementioned one or more actuators included in the steering arrangement 70 for applying a collision avoidance corrective torque to steer the front wheels 90. The data processing unit 60 is limited with regard to the maximum steering torque $T_M$ that it is capable of applying to the front wheels via the aforementioned one or more actuators. The maximum torque $T_M$ is optionally determined by legal or regulatory requirements. Alternatively, or additionally, the maximum torque $T_M$ is determined in connection with a maximum torque $T_{DRIVER}$ that a driver of the automobile 20 is capable of applying to a steering wheel 100 of the automobile 20. Thus, optionally, the maximum torque $T_{MAX}$ is chosen so that the driver is always capable of overriding a steering decision executed by the data processing unit 60; in other words, in an event of the data processing unit 60 incorrectly assessing a crash situation and attempting to apply a steering force in response, the driver of the automobile 20 is always potentially capable of preventing such an incorrect assessment from resulting in a needless collision by applying an opposing force via the steering wheel 100 to compensate for the force requested by the data processing unit 60.

Computation of the required steering torque $T_S$ is complex and will be elucidated further later; computation of the required torque $T_S$ is, for example, based upon spatial position of the one or more objects 230 detected and their distance $d_{RI}$ from the automobile 20 and/or their closing velocity $V_{Ci}$. As elucidated earlier, it is beneficial that the force $T_{DRIVER}$ > $T_S$.

In a similar manner to Equation 1 (Eq. 1), the algorithm is operable to compute a steering threat number (*STN*) defined by Equation 2 (Eq. 2):

$$STN = \frac{T_S}{T_{MAX}} \qquad\qquad \text{Eq. 2}$$

When the steering threat number *STN* is less than unity, namely *STN* < 1, the data processing unit 60 is susceptible to being able to steer the automobile 20 away from a potential collision by applying a steering torque to the steering arrangement 70. Thus, the data processing unit 60 is beneficially operable to apply automatic collision avoidance steering to the steering arrangement 70 when the threat number *STN* is less than unity.

The present invention is also concerned with a strategy for coping with the steering threat number *STN* being greater than unity, the required torque $T_S$ to avoid a collision by steering is greater than the maximum torque $T_M$ that the data processing unit 60 is permitted to invoke from the steering arrangement 70. The data processing unit 60 is operable in such a situation wherein *STN* > 1 to refrain from applying any collision avoidance steering force to the steering arrangement 70; if steering is incapable of avoiding a collision, it is essential that the driver of the automobile 20 has full control of the automobile 20 to try to select some direction of steering the automobile 20 that best mitigates damage from the potential collision.

The data processing unit 60 is operable to compute updated values for the steering threat number *STN* whilst application of required steering torque $T_S$ is invoked from the steering arrangement 70, namely during a relatively short time period during which the data processing unit 60 attempts to avoid a crash by steering intervention when the threat number *STN* is less than unity. The data processing unit 60 is thus capable of dynamically monitoring success of its steering intervention whilst the intervention is occurring. Thus, if the steering threat number *STN* decreases during a steering invention, the data processing unit 60 is operable to interpret such a decrease as being indicative that the automobile 20 is being successfully autonomously steered out of a potential collision situation. Conversely, if the steering threat number *STN* increasing during a steering intervention, the processing unit 60 is susceptible to interpreting such an increase that:

(a) the intervention is potentially unsuccessful, for example as a consequence of incorrect assessment of the one or more objects 230 in the region 40, or that

(b) the driver of the automobile 20 is applying an opposing force to momentarily override operation of the data processing unit 60; when the threat number *STN* in such case exceeds unity, the data processing unit 60 is operable to terminate the steering intervention.

Optionally, the data processing unit 60 is configured to be operable so that any increase in the threat number *STN* during a steering intervention is operable to terminate the steering intervention.

In one embodiment of the invention, method step of determining a safest direction of the automobile.

The safest direction ($F_{lane}$) 300 of the automobile 20 is defined as a portion of the sensing region 40 towards which it is safe for the automobile 20 to travel with a minimal risk of colliding with any objects taking into account trajectories of such objects; moreover, the safest direction ($F_{lane}$) 300 is not to be confused with the aforementioned second lane 210b of the section of road 200. Furthermore, the data processing unit 60 is operable to continuously update in a temporally iterative manner its data regarding angular direction of the safest direction ($F_{lane}$) 300. In a normal driving situation devoid of potential hazards in the direction of travel 220 of the automobile 20, the data processing unit 60 will compute a central portion of the sensing region 40 to be devoid of one or more obstacles such that the automobile 20 can safely travel in a direction of the central portion; in such a situation, the central portion is regarded by the data processing unit 60 to be the aforesaid safest direction ($F_{lane}$) 300. In the normal driving situation, various objects will be occasionally identified by the processing unit 60 to lie at the right-hand and left-hand side periphery regions 310b, 310a of the sensing region 40 with relative velocities $V_{Ci}$ and positions of distances $d_{Ri}$ which are not likely to intercept the safest direction ($F_{lane}$) 300 and which are not otherwise on course to impact onto the automobile 20. In such a scenario, the data processing unit 60 is operable to selectively apply a torque, as will be elucidated in more detail later, via the one or more aforementioned actuators associated with the steering arrangement 70 to steer the automobile 20 in a direction of the safest direction ($F_{lane}$) 300, thereby steering away from any potential hazards. In normal operation, a driver of the automobile steering the automobile 20 in a direction of the safest direction ($F_{lane}$) 300 devoid of hazardous objects enables the data processing unit 60 to obtain a cue for defining the safest direction ($F_{lane}$) 300 to be subsequently followed. When the driver of the automobile 20 steers the automobile 20 to an exit of the section of road 200, the safest direction ($F_{lane}$) 300 will then no longer correspond to the second lane 210b as the automobile 20 exits.

Potentially dangerous conditions are susceptible to arising in an event of the driver of the automobile 20 momentarily losing concentration, being temporarily interrupted, and/or not being able to cognitively appreciate the presence of one or more potentially hazardous objects present or likely soon to be present in the safest direction ($F_{lane}$) 300; in such case, the driver is incorrectly defining the direction of travel 220 of the automobile 20. A lack of concentration can arise from driver fatigue wherein the driver falls asleep at a wheel 100 of the automobile 20. Temporary interruption of the driver can occur when the driver is exposed to bright sunlight at low angle shining through a front window of the automobile 20 into eyes of the driver, thereby temporarily blinding a field of view of the driver; such problems are especially exacerbated when a front windscreen of the automobile 20 is misted and/or unclean. Lack of cognitive appreciation can arise as a consequence of fatigue or distraction within the automobile 20, for example noisy and mischievous children being transported on a rear seat of the automobile 20. The data processing unit 60 is, as elucidated earlier, operable to compute closing velocities $V_{Ci}$ and positions or distances $d_{Ri}$ of the one or more objects 230 to determine whether or not they are likely to occlude the safest direction ($F_{lane}$) 300.

If the driver of the automobile 20 falls asleep such that the automobile 20 steers towards a vehicle 350 traveling in an opposite direction 360 in the first lane 210a as shown in Figure 2, the data processing unit 60 will identify that the vehicle 350 is in a trajectory from the left-hand side peripheral side region 210a to the safest direction ($F_{lane}$) 300, such that the safest direction ($F_{lane}$) 300 has effectively started shifting towards the right-hand side peripheral side region 210b. In such a scenario, the data processing unit 60 is operable to apply a corrective steering torque to the steering assembly 70 to steer away from the vehicle 350 towards the second lane 210b. As will be elucidated later, the corrective steering torque is preferably of a magnitude corresponding to a collision risk $K_i$ represented by the vehicle 350; the steering torque has, for example, a magnitude which is a linear, square-law or other polynomial function of the collision risk $K_i$ represented by the vehicle 350. As the automobile 20 approaches the vehicle 350, the corrective steering torque attempting to steer the automobile 20 back towards the second lane 210b becomes progressively greater because of potentially increasing danger represented by the vehicle 350. Moreover, the corrective steering torque applied by the data processing unit 60 via the steering assembly 70 is beneficially of a maximum magnitude by design of the aforementioned actuators, or intentionally limited to the maximum magnitude by the data processing unit 60, such that the driver is capable of overriding the corrective steering torque in a potential situation that the data processing unit 60 has incorrectly assessed significances of the one or more potentially hazardous objects 230.

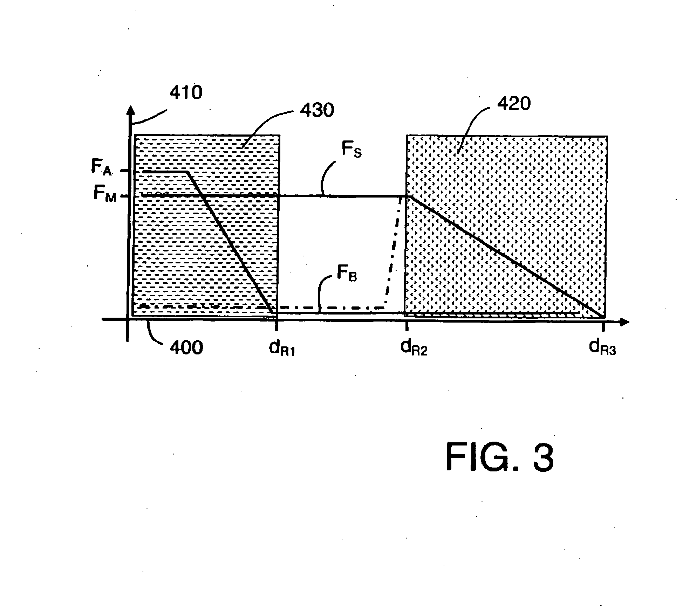

The automobile 20 is optionally also provided with automatic braking for crash mitigation or crash avoidance as represented in Figure 3. In Figure 3, there is shown a graph comprising an abscissa axis 400 representing distance of the automobile 20 from a potentially hazardous object present in the safest direction ($F_{lane}$) 300. Moreover, the graph includes an ordinate axis 410 representing braking force or corrective steering force susceptible to being invoked by the data processing unit 60 in operation. When the potentially hazardous object 230 is at a range of greater than $d_{R3}$ from the automobile 20, it is too remote to be reliably sensed by the sensor arrangement 30 and therefore the data processing unit 60 is operable to then disregard the potentially hazardous object 230; as an example, contemporary sensing technology enables the distance $d_{R3}$ to be in a range of 100 to 150 metres. Moreover, when the potentially hazardous object 230 is at a range between $d_{R2}$ and $d_{R3}$ from the automobile 20 as denoted by a regime 420, the data processing unit 60 is operable to apply a collision avoidance steering torque felt at the wheel 100 by the driver wherein the torque is represented by a curve $F_S$ which progressively increases as the one or more potentially hazardous objects 230 approach the automobile 20. Below the distance $d_{R2}$, the data processing unit 60 is operable to compute that collision avoidance by steering is not likely to be to assist the driver, in which case the collision avoidance steering torque applied by the actuators is maintained at a maximum allowed torque $T_M$ to keep the driver aware of the potentially imminent collision, or reduced to substantially zero as illustrated as a dotted line in Figure 3 so as the provide the driver with full steering control. Application of an increasing collision avoidance steering torque below the distance $d_{R2}$ is potentially susceptible to causing the automobile 20 to spin which may represent a potentially even greater hazard on the section of road 200. Below a distance $d_{R1}$ in a regime 430, the data processing unit 60 is operable to apply autonomous braking as a last resort to provide collision avoidance or collision mitigation. A braking force $F_B$ which is autonomously applied increases as the distance $d_{Ri}$ decreases, the braking force being limited to a maximum force $F_A$ that can safely be applied by the automobile 20.

Thus, as illustrated in Figure 2, if the collision avoidance steering torque generated by the actuators in response to instructions from the data processing unit 60 is unable to divert the automobile 20 from colliding with the vehicle 350, automatic braking is applied by the automobile 20 as last resort. However, both the data processing unit 60 and the aforesaid automatic braking for the automobile 20 can be synergistically provided with signals generated in operation by the sensor arrangement 40. Beneficially, automatic braking is also implemented via the data processing unit 60.

When automatic crash mitigation or avoidance is implemented in the automobile 20, a braking force $F_B$ required to avoid a collision with a leading vehicle to the automobile 20 is computed in the data processing unit 60; computation of the braking force $F_B$ requires optionally taking into account road conditions as sensed by additional sensors to the sensor arrangement 30 included within or on the automobile 20, for example precipitation and temperature sensors. The data processing unit 60 executes a braking algorithm and then compares the computed braking force $F_B$ required to avoid a collision with physical limitations of the automobile 20, such limitations including tyre-to-road friction, and brake system rise-time, namely a braking force $F_A$ that the automobile 20 is capable of providing; "tyres" are also known as "tires" in certain variants of English.

The data processing unit 60 is operable to compute a brake threat number (*BTN*) defined by Equation 1 (Eq. 1):

$$BTN = \frac{F_B}{F_A} \qquad\qquad \text{Eq. 1}$$

In a situation when the required braking force $F_B$ is greater than the braking force $F_A$ that the automobile 20 is capable of providing, the brake threat number *BTN* is greater than unity and the data processing unit 60 detects that a potential collision cannot be avoided solely by braking; the data processing unit 60 is then operable to automatically apply a braking force to one or more of the brake units 80 for crash mitigating, namely reducing a severity of, likely damage resulting from a collision event.

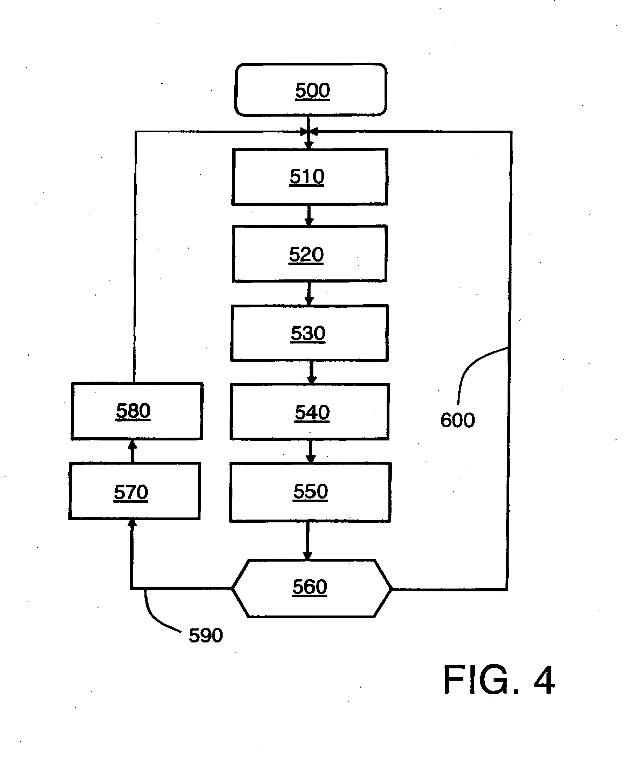

The algorithm described in the foregoing executed in the data processing unit 60 will now be further elucidated with reference to Figure 4. Steps of the algorithm are depicted in Figure 4 which are susceptible to being interpreted with reference to Table 1.

**Table 1:**

| Ref. number | Interpretation |
| --- | --- |
| 500 | Start of the algorithm |
| 510 | Sense using the sensor arrangement 30 the region 40 to sense relative positions $(x_i, y_i)$ of i objects 230 in the region 40 from angle $\theta$ and distance $d_{Ri}$ of the i objects; sense also closing velocities $V_{Ci}$ from the sensor arrangement; all sensed for time $t + \Delta t$. |
| 520 | Compute trajectories of the *i* objects 230; derive image of objects from video camera output to determine a spatial extension of the objects. |
| 530 | .Determine whether any object or group of objects are to be considered as a potentially hazardous object. An object is considered to be potentially hazardous if a future path of the host vehicle will pass through an object i having a spatial extension. |

(continued)

| Ref. number | Interpretation |
|---|---|
| 540 | Compute STN from Equation 2 including the steps of computing a steering torque $T_{REQ}$ required to be applied to the steering arrangement 70 to avoid a collision and retrieving a value representative of a maximum torque available. |
| 550 | Determining how to intervene in dependence of the computed STN value. The intervention may preferably include the steps of:<br>- no intervention in the event the STN is below a first threshold value, which may suitably be set between 0,6 and 0,95, preferably between 0,75 and 0,90;<br>- no intervention in the event the steering torque required exceeds the maximum torque available, that is STN > 1;<br>- intervention, preferably by application of a steering torque, in the event the STN is above the first threshold value and the maximum torque available exceeds the steering torque required, that is STN < 1. The magnitude of the steering torque applied is selected so as to avoid the potentially hazardous object with a small margin. The steering torque applied will therefore suitably amount to the steering torque required multiplied by a safety factor slightly greater than 1. The safety factor is suitably selected between 1,01 and 1,2, preferably between 1,05 and 1,15. |
| 560 | In an embodiment an optional step of checking whether or not one or more of the i objects 230 are closer than the threshold distance $d_{R1}$ within the safest direction ($F_{lane}$) 300; if the safest direction ($F_{lane}$) 300 is occluded or likely to be occluded, proceed along a path 590 after an update time $\Delta t$: $t = t + \Delta t$. If no crash risk exists, proceed along a path 600. |
| 570 | In an embodiment an optional step of computing braking force required from signals from the sensor arrangement 30 (e.g. road surface conditions, precipitation) and autonomously applying braking force to brake assemblies 80 of the automobile 20 may additionally be included. |
| 590 | . |

Although Equation 2 (Eq. 2) includes a parameter of the required steering torque $T_{REQ}$, it will be appreciated that computation of the magnitude and direction, namely steer right or left, of the required steering torque $T_{REQ}$ is a complex task associated with updated computation of the safest direction ($F_{lane}$) 300.

In a simplest implementation of the data processing unit 60, the algorithm is operable to consider the region 40 to be subdivided into left and right sectors. A direction in which the torque $T_{REQ}$ is directed is beneficially away from the sector of the region 40 which results in one or more of: the strongest return signal, a shortest distance to an object and a fastest closing velocity to an object when interrogated by the sensor arrangement 30. More complex implementations are possible wherein the region 40 is subdivided into more than two sectors and signals from several types of sensors included in the sensor arrangement 30 are merged; for example, a microwave radar sensor is susceptible to providing a stronger signal from relatively smaller metallic objects than relatively larger concrete objects, whereas a lidar sensor included in the sensor arrangement 30 is considerably affected by special types of optical coatings included on objects. Moreover, an optical video camera is susceptible to being influenced by strength of ambient light radiation in the region and color contrast of the one or more objects 230. Most reliably representative signals from the sensor arrangement 30 representative of the one or more objects 230 in front of the automobile 20 are potentially obtained by merging signals generated from mutually different types of sensors included in the arrangement, for example a combination of *lidar* and microwave radar.

In the automobile 20, a warning is defined as being an audible, tactile or hepatic warning which does not alter the path or trajectory of the automobile 20 without an appropriate response from the driver. Moreover, an intervention applied by the data processing unit 60 is an ability of the data processing unit 60 to directly affect a trajectory of the automobile 20; in the present invention, with regard to steering, intervention has limited authority and is intended to augment commands from the driver. As elucidated earlier, the safest direction ($F_{lane}$) 300 is defined as an area of roadway that the automobile 20 would be expected to travel in the absence of any obstruction, for example from the one or more objects 230. A lane departure is defined as a point in time when one of the front wheels of the automobile 20 are outside a corresponding lane boundary.

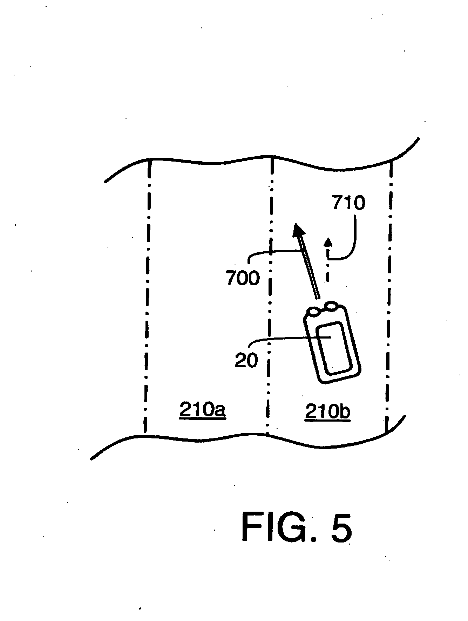

Various driving scenarios will now be described with reference to Figures 5 to 8 wherein the present invention is utilized to provide collision avoidance by steering. Referring to Figure 5, there is shown the automobile 20 being driven along the lane 210b. In such a situation, the safest direction ($F_{lane}$) of the automobile 20 is straight ahead along the lane 210b; the safest direction ($F_{lane}$) is therefore defined by an arrow 710. The driver then causes the automobile 20 to change direction as denoted by an arrow 700. On account of their being no obstructing objects detected by the sensor arrangement 30 in conjunction with the data processing unit 60 in the changed direction 700, the data processing unit 60 interprets such a situation to be a bona fide maneuver by the driver such that the safest direction ($F_{lane}$) is interpreted by the data processing unit 60 to have changed from the direction 710 to the direction 700.

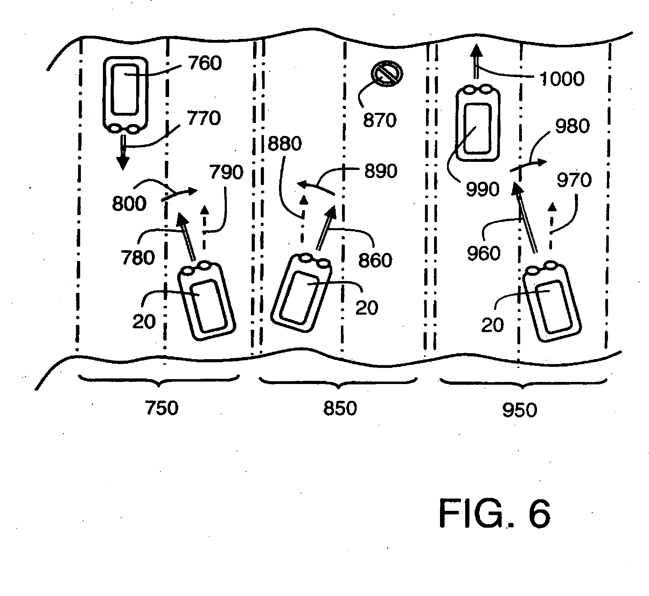

Referring next to Figure 6, there is shown a more complex multi-lane road scenarios including three sections 750, 850, 950. In the section 750, the automobile 20 is traveling along its safest direction ($F_{lane}$) whose direction is denoted by an arrow 790 at a time t. At a time t + $\Delta$t, the driver causes the automobile 20 to turn in a left-hand direction denoted by an arrow 780 towards a vehicle 760 traveling in another direction denoted by an arrow 770. The data processing unit 60 in combination with the sensor arrangement 30 is operable to detect a presence of the vehicle 760 and also determine its direction of travel. The data processing unit 60 computes that the vehicle 760 could represent a collision hazard based on video camera information. However, the data processing unit 60 is also operable to compute that should the direction of the safest direction ($F_{lane}$) be updated to correspond to that of the direction 780, that the vehicle 760 with time will exit from the safest direction ($F_{lane}$) when assumed to be in the direction 780. In such a scenario, the vehicle 760 is correctly recognized not to be a considerable hazard and the data processing unit 60 is operable to applying a modest steering torque to the steering arrangement 70 to cause the automobile 20 to tend to steer slightly towards the right-hand side as denoted by an arrow 800.

In the section 850, the automobile 20 at a time t is traveling in a direction denoted by an arrow 880 corresponding to its safest direction ($F_{lane}$). The driver of the automobile 20 then subsequently at a time t + $\Delta$t causes the automobile 20 to change direction denoted by an arrow 860 in a direction of an object 870 which the data processing unit 60 in combination with the sensor arrangement 30 identifies is a stationary object and represents a collision hazard for the automobile 20. The data processing unit 60 is operable to determine that the safest direction ($F_{lane}$) in a direction of the arrow 880 is correct and that the driver of the automobile 20 is attempting a dangerous maneuver by steering into the direction 860. In consequence, the data processing unit 60 is operable to apply a relatively strong torque denoted by an arrow 890 via the steering arrangement to steer the automobile towards the original safest direction ($F_{lane}$) in the direction 880. The magnitude of the torque is determined by several factors:

(a) that the object 870 is capable of representing a collision hazard as identified from video information, thereby having a high $K_i$ risk value;
(b) that the object 870 is not in a trajectory moving away from the direction 860 such that if the direction 860 were assumed to the updated safest direction ($F_{lane}$) at the time t + $\Delta$t, that the object 870 would lie on the path of such an updated safest direction ($F_{lane}$) thereby representing an unacceptable risk situation; and
(c) that the object 870 is stationary giving rise to a potentially high closing velocity $V_{Ci}$ in respect of the automobile 20.

In the section 950, the automobile 20 is at a time *t* traveling along its safest direction ($F_{lane}$) in a direction denoted by an arrow 970. The driver then causes the automobile 20 to change its direction of travel as denoted by an arrow 960 towards a vehicle 990 traveling in a direction 1000. The data processing unit 60 in combination with sensing arrangement 30 identifies the vehicle 990 to represent a collision hazard, but to be moving in a general direction substantially similar to that of the automobile 20, namely with a relatively low closing velocity $V_{Ci}$. In such a situation, the data processing unit 60 causes the steering arrangement 70 to apply a more modest torque denoted by an arrow 980 to steer the automobile 20 back towards its original safest direction ($F_{lane}$) denoted by the arrow 970. However, were the vehicle 990 to be sensed to be moving away from the automobile 20, the torque 980 would be corresponding less or substantially negligible.

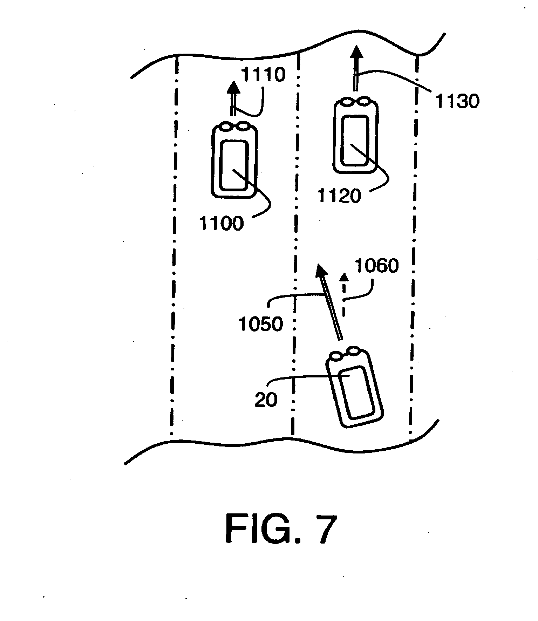

In Figure 7, there is shown a road situation which is often encountered on motorways and such like. The automobile 20 at a time t is traveling in a direction denoted by an arrow 1060 defining a safest direction ($F_{lane}$) for the automobile 20. In front of the automobile 20 is a second vehicle 1120 traveling in a direction 1130 which is substantially in the same direction as the safest direction ($F_{lane}$) of the automobile 20. On account of the automobile 20 and the second vehicle 1120 having substantially zero relative closing velocity $V_{Ci}$, the data processing unit 60 is operable to interpret the second vehicle 1120 as not being a collision risk to the automobile 20. The driver of the automobile 20 then decides to overtake the second vehicle 1120 and changes direction denoted by an arrow 1050 towards a first vehicle 1100 traveling in a direction denoted by an arrow 1110, this direction 1110 being substantially similar to the direction of travel 1130 of the second vehicle 1120. In a situation wherein the first vehicle 1100 is traveling away from the automobile 20 faster than the second vehicle 1120, the data processing unit 60 in combination with the sensing arrangement 30 is operable to determine that the change of direction of travel of the automobile 20 as denoted by the arrow 1050 is a safe maneuver and subsequently at a time t + $\Delta$t updates its information regarding the safest direction ($F_{lane}$) of the automobile to correspond to a direction of the arrow 1050. However, in a situation wherein the first vehicle 1120 is traveling more slowly than the second vehicle 1120, the data processing unit 60 identifies the automobile 20 and the first vehicle 1100 to have a closing velocity $V_{Ci}$ favoring the safest direction ($F_{lane}$) of the automobile 20 to remain along the direction 1060; in such a situation, the data processing unit 60 applies a torque via the steering arrangement 70 to urge the automobile towards the direction 1060. On account of the two vehicles 1100 and 1120 being substantially similar objects, their hazard ratings $K_i$ will be mutually similar, as determined from video camera information provided to the data processing unit 60, hence determination of the safest direction ($F_{lane}$) is based on vehicle relative velocity information, for example closing velocity information.

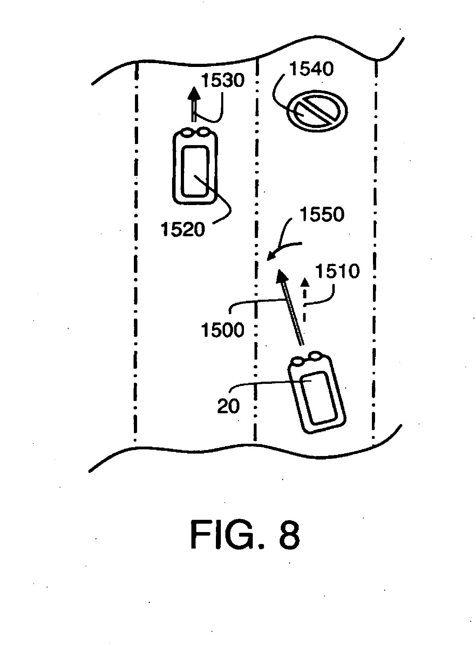

Referring next to Figure 8, there is shown the automobile 20 traveling in a direction denoted by an 1510 defining a safest direction ($F_{lane}$) for the automobile 20. Directly ahead of the automobile 20 is a stationary object 1540, for example road works or an abandoned vehicle, and traveling in a left-hand lane is a moving vehicle 1520 traveling in a direction denoted by an arrow 1530 substantially parallel to the safest direction ($F_{lane}$) of the automobile 20. The data processing unit 60, by processing sensing signals output from the sensor arrangement 30, will identify that the object 1540 has a high closing velocity $V_{Ci}$ relative to the automobile 20 in comparison to that of the vehicle 1520. The data processing unit 60 will in such a situation apply a strong torque in a left-hand direction as denoted by an arrow 1550 to steer the automobile 20 away from a collision with the stationary object 1540 towards the vehicle 1520 as denoted by an arrow 1500. The arrow 1500 thus defines an updated safest direction ($F_{lane}$) for the automobile 20 even despite the safest direction ($F_{lane}$) being now directed towards a vehicle.

In the examples shown in Figure 5 to 8 and described in the foregoing, it will be appreciated that the data processing unit 60 is operable to apply a torque via the steering arrangement which is a complex function of several parameters. The complex function is represented in general form in Equation 3 (Eq. 3):

$$T_{REQ} = \Psi\left[\sum_{i=1}^{n}\left(\left(x_i, y_i\right), \theta_i, t, V_{auto}, \left(v_{xi}, v_{yi}\right), F_l\right)\right] \qquad \text{Eq. 3}$$

such that

$$\left|T_{REQ}\right| = T_M \text{ when } T_{REQ} > T_M,$$

wherein

$T_{REQ}$ = torque to be applied by the data processing unit 60 via the steering arrangement 70 to avoid a collision by steering;

$\Psi$ = a complex algorithm function implemented by the data processing unit 60, see Figure 4;

$i$ = object identification index;

$n$ = total number of objects within the sensing region 40 of the sensing arrangement 30;

$V_{auto}$ = traveling velocity of the automobile 20, for example sensed using tachometers coupled to the wheels 90 of the automobile 20;

$(v_{xi}, v_{yi})$ = velocity of the $i$ th object relative to the automobile 20 as determined from multiple relative position computations derived from signals from the $i$ th object;

$(x_i, y_i)$ = relative position of the $i$ th object relative to the automobile 20; and

$F_L$ = present direction of the safest direction ($F_{lane}$) of the automobile 20.

It will be appreciated that complex function represented in Equation 3 (Eq. 3) is an example of signal processing performed in the data processing unit 60 operable to provide automatic steering characteristics as described, for example, with reference to Figures 5 to 8 but not limited thereto. Parameters employed in Equation 3 (Eq. 3) can be varied depending upon steering characteristic desired; for example, road condition sensors can also input to the sensing arrangement 30 so that more conservative steering maneuvers are implemented by the data processing unit 60 when road conditions are slippery, for example in icy winter conditions.

The sensing arrangement 30 can be further supplemented with sensors mounted at a rear of the automobile 20 to sense potential rear-end impact onto the automobile 20, for example to steer the automobile 20 away from a potential rear-end collision.

In the foregoing, it will be appreciated that autonomous steering is applied firstly by the processing unit in response to signals provided by the sensing arrangement 30. In an event of a steering maneuver not being able to avert a collision, the data processing unit 60 is operable to implement autonomous braking for crash avoidance or crash mitigation when the distance between the automobile and one or more objects 230 is less than $d_{R1}$ as depicted in Figure 3.

The data processing unit 60 can be implemented such that autonomous steering to avoid collision as elucidated in the foregoing is only active when the velocity $V_{auto}$ of the automobile 20 is above a lower threshold velocity, for example $V_{auto} > 65$ km/h. Moreover, the such autonomous steering is optionally disabled when the velocity $V_{auto}$ of the automobile 20 is above an upper threshold velocity, for example $V_{auto} > 120$ km/h; such a limit is desirable in that 120 km/hour corresponds to approximately 40 metres/second in which case the sensing arrangement 30 with a range of 150 metres is only capable of sensing up to 5 seconds of travel of the automobile 20. Optionally, the data processing unit 60 is operable to cope with a road curvature radius of 250 metres or greater. Optionally, the data processing unit 60 can be configured to abort automatic steering intervention in a situation wherein a collision cannot be avoided so as to give the driver of the automobile 20 full control of the automobile.

It will be appreciated that modifications to embodiments of the invention described in the foregoing are possible without departing from the scope of the invention as defined by the accompanying claims.

Reference numerals included within parentheses in the claims are intended to assist understanding of the subject matter claimed in the claims, and are not to be construed to be limiting the scope of the claims. Reference to the singular is also to be construed to relate to the plural.

Terms used in describing and claiming the present invention such as "include", "comprise", "consist of", "have", "are", "incorporate", are to be construed in a non-exclusive manner, namely to allow for other parts or components to be present which are not explicitly indicated.


**Claims**

1.  A steering safety system (30, 60, 70) operable to apply a steering torque to a steering arrangement (70) of an automobile (20) in response to a potential collision event involving one or more potentially hazardous objects (230) being identified, the system (30, 60, 70) including:

    (a) a sensor arrangement (30) operable to interrogate a sensing region (40) external to the automobile (20) and generate corresponding sensor signals; and
    (b) a processing arrangement (60) operable to receive the sensor signals and to compute positions and relative velocities of said one or more potentially hazardous objects (230) in the sensing region (40) therefrom, and to compute a value representative of a steering torque required to be applied to steer said automobile (20) in a direction to avoid said hazardous objects , to retrieve a value representative of maximum torque available to steer said automobile (20) in said direction, and to compare the value representative of the maximum torque available with the value representative of the steering torque required to avoid said hazardous object, and to decide how to intervene in response to said comparison.

2.  A steering safety system according to claim 1, wherein said steering safety system is arranged to not apply any steering torque in the event said steering torque required exceeds said maximum torque available to avoid said hazardous object.

3.  A steering safety system according to claim 1 or 2, wherein said steering safety system is arranged to compute a ratio value representative of a ratio of said required steering torque to said maximum torque available.

4.  A steering safety system according to claim 3, wherein said steering safety system is arranged to not apply any steering torque in the event said ratio value is below a first threshold value.

5.  A steering system according to any of claims 1 - 4, wherein said steering safety system is arranged to intervene in the event said ratio value is above a first threshold value.

6.  A steering safety system according to claim 5, wherein said steering safety system is arranged to intervene by applying a steering torque in order to avoid said hazardous objects.

7.  A steering system according to any of claims 1 - 6, wherein said steering safety system is arranged to compute therefrom a relatively safest direction ($F_{lane}$) (300) along which the automobile (20) is capable of traveling in operation to try to avoid said one or more potentially hazardous objects (230)

8.  A steering safety system (30, 60, 70) as claimed in claim 7, wherein the processing arrangement (60) is operable to compute future trajectories of the one or more potentially hazardous objects (230) potentially obstructing said safest direction ($F_{lane}$) (300), the processing arrangement (60) being operable to apply via the steering arrangement (70) the steering torque in the potential collision event to steer a direction of travel of the automobile (20) towards

the safest direction ($F_{lane}$).

9. A steering safety system (30, 60, 70) as claimed in claim 7 or 8, wherein the sensor arrangement (30) comprises a first sensor assembly operable to emit radiation towards the sensing region (40) and receive corresponding reflected radiation therefrom, and a second sensor assembly operable to image the sensing region (40), the processing arrangement (60) being operable to associate sensed signals corresponding to the one or more potentially hazardous objects (230) received from the first and second sensor assemblies and to associate a hazard risk for each of the one or more potentially hazardous objects (230), wherein the processing arrangement (60) is operable to compute a portion of the safest direction ($F_{lane}$) (300) which is potentially unobstructed as a function of the hazard risks of the one or more potentially hazardous objects (230).

10. A steering safety system (30, 60, 70) as claimed in claim 7, 8 or 9, wherein the system (30, 60, 70) is operable when the automobile (20) is traveling at a velocity greater than a first threshold velocity.

11. A steering safety system (30, 60, 70) as claimed in claim 7, 8, 9 or 10, wherein the system (30, 60, 70) is disabled when the automobile (20) is traveling at a velocity greater than a second threshold velocity, said second threshold velocity being greater than said first threshold velocity.

12. A steering safety system (30, 60, 70) as claimed in any one of the preceding claims, wherein the system (30, 60, 70) is disabled from intervening when the available torque is less than the required torque.

13. A steering safety system (30, 60, 70) as claimed in any one of the preceding claims, wherein the system (30, 60, 70) is disabled from intervening when the required torque is below a first torque threshold.

14. A steering safety system (30, 60, 70) as claimed in any one of the preceding claims, wherein the system (30, 60, 70) is operable to intervene when the required torque is in a range of a lower torque threshold to an upper torque threshold.

15. A steering safety system (30, 60, 70) as claimed in any one of the preceding claims, wherein the processing arrangement (60) is operable to limit the steering force to an upper limit, said upper limit being less than a torque applicable by a driver of the automobile (20) such that the driver is capable of overriding the steering torque applied by the system (30, 60, 70) when in operation.

16. A steering safety system (30, 60, 70) as claimed in any one of the preceding claims, wherein the system (30, 60, 70) is hindered from intervening when said one or more potentially hazardous objects (230) are less than a first threshold distance ($d_{R2}$) from the automobile (20).

17. A steering safety system (30, 60, 70) as claimed in any one of the preceding claims, wherein the steering system (30, 60, 70) is operable to enable automatic braking for collision mitigation or collision avoidance when said one or more potentially hazardous objects (230) are less than a second threshold distance ($d_{R1}$) from the automobile (20).

18. A steering safety system (30, 60, 70) as claimed in claim 11, wherein sensor signals for implementing the automatic braking are provided from the sensor arrangement (30).

19. A steering safety system (30, 60, 70) as claimed in claims 16 and 17, wherein the second threshold distance ($d_{R1}$) is less than the first threshold distance ($d_{R2}$).

20. A steering safety system (30, 60, 70) as claimed in any one of the preceding claims, wherein the system (30, 60, 70) is operable to steer (800) towards the present safest direction ($F_{lane}$) (790) in an event that the automobile (20) is steered (780) by its driver away from the safest direction ($F_{lane}$) (790) towards one or more objects (760) representing a potential collision hazard.

21. A steering safety system (30, 60, 70) as claimed in any one of the preceding claims, wherein the system (30, 60, 70) is operable to steer (1550) away from the present safest direction ($F_{lane}$) (1510) towards a future safest direction ($F_{lane}$) (1500) in an event that the present safest direction (1510) is determined by the processing arrangement (60) to be potentially obstructed by the one or more potentially hazardous objects (1540).

22. A method of applying in a steering safety system (30, 60, 70) a steering torque to a steering arrangement (70) of an automobile (20) in response to a potential collision event involving one or more potentially hazardous objects (230) being identified, the method including steps of:

> (a) interrogating using a sensor arrangement (30) a sensing region (40) external to the automobile (20) and generating corresponding sensor signals;
> (b) receiving in a processing arrangement (60) the sensor signals and computing positions and relative velocities of one or more potentially hazardous objects (230) in the sensing region (40) therefrom,
> (c) computing a steering torque required to be applied to steer said automobile (20) in a direction to avoid said hazardous objects;
> (d) retrieving a maximum torque available to steer said automobile (20) in said direction;
> (e) comparing the value representative of the maximum torque available with the value representative of the steering torque required to avoid said hazardous object,
> (f) and deciding how to intervene in response to said comparison.

23. A method according to claim 22, wherein said steering safety system does not apply any steering torque in the event said steering torque required exceeds said maximum torque available to avoid said hazardous object.

24. A method according to claim 22 or 23, wherein said steering safety computes a ratio value representative of a ratio of said required steering torque to said maximum torque available.

25. A method according to claim 24, wherein said steering safety system does not apply any steering torque in the event said ratio value is below a first threshold value.

26. A method according to any of claims 25, wherein said steering safety intervenes in the event said ratio value is above a first threshold value.

27. A method according to claim 26, wherein said steering safety system intervenes by applying a steering torque in order to avoid said hazardous objects.

28. A method according to any of claims 22 - 27, further including the method step of computing therefrom a relatively safest direction ($F_{lane}$) (300) in which the automobile (20) is capable of traveling in operation with minimal risk of collision;

29. A method according to claim 28, further including the method step of computing whether or not to intervene to apply the steering torque to steer said automobile (20) in said safest direction ($F_{lane}$)(300) in response to said ratio value.

30. A method as claimed in claim 29, wherein said method includes a step of:

> (g) computing in the processing arrangement (60) future availability of said safest direction ($F_{lane}$) (300) accounting for trajectories of the one or more potentially hazardous objects (230) potentially obstructing the safest direction ($F_{lane}$) (300), and applying via a steering arrangement (70) a steering force in the potential collision event to steer a direction of travel of the automobile (20) towards a portion of the safest direction ($F_{lane}$) (300) which is potentially unobstructed by the one or more potentially hazardous objects (230).

31. A method as claimed in claim 30, wherein said method in step (a) includes steps of:

> (h) emitting from a first sensor assembly of said sensor arrangement (30) radiation towards the sensing region (40) and receiving corresponding reflected radiation therefrom, and
> (i) imaging from a second sensor assembly of said sensor arrangement (30) the sensing region (40),

and wherein said method in step (b) includes steps of:

> (j) associating in the processing arrangement (60) sensed signals corresponding to the one or more potentially hazardous objects (230) received from the first and second sensor assemblies, and associating a hazard risk ($K_i$) for each of the one or more potentially hazardous objects (230), and
> (k) computing in the processing arrangement (60) the portion of the safest direction ($F_{lane}$) (300) which is potentially unobstructed as a function of the hazard risks of the one or more potentially hazardous objects (230).

32. A method as claimed in claim 30 or 31, wherein the method is operable to cause steering towards the present safest direction ($F_{lane}$) in an event that the automobile (20) is steered by its driver away from the safest direction ($F_{lane}$) towards one or more objects (230) representing a potential collision hazard.

33. A method as claimed in any one of claims 30 to 32, wherein the method is operable to cause steering away from the present safest direction ($F_{lane}$) towards a future safest direction ($F_{lane}$) in an event that the present safest direction ($F_{lane}$) is determined by the processing arrangement (60) to be potentially obstructed by the one or more potentially hazardous objects (230).

34. Software product on a data carrier, said software product being executable on computing hardware to implement the method as claimed in any one of claims 22 to 33.

35. An automobile (20) including a steering safety system (30, 60, 70) as claimed in any one of claims 1 to 21.

**Patentansprüche**

1. Lenksicherheitssystem (30, 60, 70), das ein Lenkmoment an einer Lenkanordnung (70) eines Fahrzeugs (20) in Antwort auf ein, ein oder mehrere potentiell gefährliche, identifizierte Objekte (230) betreffendes, potentielles Kollisionsereignis aufbringen kann, wobei das System (30, 60, 70) aufweist:

> (a) eine Sensoranlage (30), die eine Erfassungsregion (40) außerhalb des Fahrzeugs (20) abfragen kann und entsprechende Sensorsignale erzeugen kann, und
> (b) eine Verarbeitungsanlage (60), welche die Sensorsignale empfangen kann und Positionen und relative Geschwindigkeiten des einen oder der mehreren potentiell gefährlichen Objekte (230) in der Erfassungsregion (40) hiervon berechnen kann, und einen Wert berechnen kann, der für ein Lenkmoment repräsentativ ist, das benötigt wird, zum Lenken des Fahrzeugs (20) in einer Richtung aufgebracht zu werden, um die gefährlichen Objekte zu meiden, einen für ein zum Lenken des Fahrzeugs (20) in der Richtung maximal verfügbares Moment repräsentativen Wert erhalten kann, und den für das maximal verfügbare Moment repräsentativen Wert mit dem für das zum Meiden des gefährlichen Objekts benötigte Lenkmoment repräsentativen Wert vergleichen kann, und entscheiden kann, wie in Antwort auf den Vergleich einzugreifen ist.

2. Lenksicherheitssystem gemäß Anspruch 1, bei dem das Lenksicherheitssystem eingerichtet ist, kein Lenkmoment aufzubringen, falls das benötigte Lenkmoment das maximal verfügbare Moment zum Meiden des gefährlichen Objekts übersteigt.

3. Lenksicherheitssystem gemäß Anspruch 1 oder 2, bei dem das Lenksicherheitssystem eingerichtet ist, den für ein Verhältnis des benötigten Lenkmoments zum maximal verfügbaren Moment repräsentativen Verhältniswert zu berechnen.

4. Lenksicherheitssystem gemäß Anspruch 3, bei dem das Lenksicherheitssystem eingerichtet ist, kein Lenkmoment aufzubringen, falls sich der Verhältniswert unterhalb eines ersten Schwellwerts befindet.

5. Lenksystem gemäß einem der Ansprüche 1-4, bei dem das Lenksicherheitssystem eingerichtet ist, einzugreifen, falls sich der Verhältniswert oberhalb eines ersten Schwellwerts befindet.

6. Lenksicherheitssystem gemäß Anspruch 5, bei dem das Lenksicherheitssystem eingerichtet ist, durch Aufbringen eines Lenkmoments einzugreifen, um die gefährlichen Objekte zu meiden.

7. Lenksystem gemäß einem der Ansprüche 1-6, bei dem das Lenksicherheitssystem eingerichtet ist, hiervon eine relativ sicherste Richtung ($F_{lane}$) (300) zu berechnen, entlang der sich das Fahrzeug (20) im Betrieb bewegen kann, um ein Meiden des einen oder der mehreren potentiell gefährlichen Objekte (230) zu versuchen.

8. Lenksicherheitssystem (30, 60, 70) gemäß Anspruch 7, bei dem die Verarbeitungsanlage (60) zukünftige Trajektorien des einen oder der mehreren potentiell gefährlichen Objekte (230) berechnen kann, die potentiell die sicherste Richtung ($F_{lane}$) (300) behindern, wobei die Verarbeitungsanlage (60) über die Lenkanlage (70) das Lenkmoment im potentiellen Kollisionsfall aufbringen kann, um eine Richtung der Bewegung des Fahrzeugs (20) in Richtung der sichersten Richtung ($F_{lane}$) zu lenken.

9.  Lenksicherheitssystem (30, 60, 70) gemäß Anspruch 7 oder 8, bei dem die Sensoranlage (30) eine erste Sensorbaugruppe, die eine Strahlung in Richtung der Erfassungsregion (40) emittieren kann und entsprechende, reflektierte Strahlung hiervon empfangen kann, und eine zweite Sensorbaugruppe umfasst, welche die Erfassungsregion (40) abbilden kann, wobei die Verarbeitungsanlage (60) mit dem einen oder den mehreren potentiell gefährlichen Objekten (230) entsprechende, erfasste Signale assoziieren kann, die von der ersten und zweiten Sensorbaugruppe empfangen wurden, und ein gefährliches Risiko für jedes des einen oder der mehreren potentiell gefährlichen Objekte (230) assoziieren kann, wobei die Verarbeitungsanlage (60) einen Abschnitt der sichersten Richtung ($F_{lane}$) (300), die potentiell nicht behindert ist, als eine Funktion der gefährlichen Risiken von dem einen oder den mehreren potentiell gefährlichen Objekten (230) berechnen kann.

10. Lenksicherheitssystem (30, 60, 70) gemäß Anspruch 7, 8 oder 9, bei dem das System (30, 60, 70) betreibbar ist, wenn sich das Fahrzeug (20) mit einer größeren Geschwindigkeit als eine erste Schwellwertgeschwindigkeit bewegt.

11. Lenksicherheitssystem (30, 60, 70) gemäß Anspruch 7, 8, 9 oder 10, bei dem das System (30, 60, 70) deaktiviert ist, wenn sich das Fahrzeug (20) bei einer größeren Geschwindigkeit als einer zweiten Schwellwertgeschwindigkeit bewegt, wobei die zweite Schwellwertgeschwindigkeit größer ist als die erste Schwellwertgeschwindigkeit.

12. Lenksicherheitssystem (30, 60, 70) gemäß einem der vorangegangenen Ansprüche, bei dem das System (30, 60, 70) vom Eingreifen deaktiviert ist, wenn das verfügbare Moment geringer als das benötigte Moment ist.

13. Lenksicherheitssystem (30, 60, 70) gemäß einem der vorangegangenen Ansprüche, bei dem das System (30, 60, 70) vom Eingreifen deaktiviert ist, wenn sich das benötigte Moment unterhalb eines ersten Momentschwellwerts befindet.

14. Lenksicherheitssystem (30, 60, 70) gemäß einem der vorangegangenen Ansprüche, bei dem das System (30, 60, 70) eingreifen kann, wenn sich das benötigte Moment innerhalb eines Bereichs von einem unteren Momentschwellwert bis zu einem oberen Momentschwellwert befindet.

15. Lenksicherheitssystem (30, 60, 70) gemäß einem der vorangegangenen Ansprüche, bei dem die Verarbeitungsanlage (60) die Lenkkraft auf eine obere Grenze begrenzen kann, wobei die obere Grenze geringer ist als ein durch einen Fahrer des Fahrzeugs (20) aufbringbares Moment, so dass der Fahrer das durch das System (30, 60, 70) im Betrieb aufgebrachte Lenkmoment übersteuern kann.

16. Lenksicherheitssystem (30, 60, 70) gemäß einem der vorangegangenen Ansprüche, bei dem das System (30, 60, 70) daran gehindert wird, einzugreifen, wenn das eine oder die mehreren potentiell gefährlichen Objekte (230) weniger als ein erster Schwellwertabstand ($d_{R2}$) vom Fahrzeug (20) entfernt ist/sind.

17. Lenksicherheitssystem (30, 60, 70) gemäß einem der vorangegangenen Ansprüche, bei dem das Lenksystem (30, 60, 70) eine automatische Bremsung für eine Kollisionsminderung oder Kollisionsvermeidung ermöglichen kann, wenn das eine oder die mehreren potentiell gefährlichen Objekte (230) weniger als ein zweiter Schwellwertabstand ($d_{R1}$) vom Fahrzeug (20) entfernt ist/sind.

18. Lenksicherheitssystem (30, 60, 70) gemäß Anspruch 11, bei dem Sensorsignale zum Implementieren der automatischen Bremsung von der Sensoranlage (30) bereitgestellt werden.

19. Lenksicherheitssystem (30, 60, 70) gemäß den Ansprüchen 16 und 17, bei dem der zweite Schwellwertabstand ($d_{R1}$) geringer ist als der erste Schwellwertabstand ($d_{R2}$).

20. Lenksicherheitssystem (30, 60, 70) gemäß einem der vorangegangenen Ansprüche, bei dem das System (30, 60, 70) in Richtung der momentan sichersten Richtung ($F_{lane}$) (790) steuern kann, falls das Fahrzeug (20) durch seinen Fahrer von der sichersten Richtung ($F_{lane}$) (790) weg in Richtung des eine potentielle Kollisionsgefahr repräsentierenden, einen oder mehreren Objekte (760) weggesteuert (87) wird.

21. Lenksicherheitssystem (30, 60, 70) gemäß einem der vorangegangenen Ansprüche, bei dem das System (30, 60, 70) von der momentan sichersten Richtung ($F_{lane}$) (1510) in Richtung einer zukünftig sichersten Richtung ($F_{lane}$) (1500) weg lenken (1550) kann, falls die momentan sicherste Richtung (1510) durch die Verarbeitungsanlage (60) bestimmt wurde, potentiell durch das eine oder die mehreren potentiell gefährlichen Objekte (1540) behindert werden.

**22.** Verfahren zum Aufbringen eines Lenkmoments an einer Lenkanordnung (70) eines Fahrzeugs (20) in einem Lenksicherheitssystem (30, 60, 70) in Antwort auf einen, ein oder mehrere potentiell gefährliche, identifizierte Objekte (230) betreffenden potentiellen Kollisionsfall, wobei das Verfahren die Schritte aufweist:

(a) Abfragen einer Erfassungsregion (40) außerhalb des Fahrzeugs (20) mittels einer Sensoranlage (30), und Erzeugen entsprechender Sensorsignale,

(b) Empfangen der Sensorsignale in einer Verarbeitungsanlage (60), und Berechnen von Positionen und relativen Geschwindigkeiten des einen oder der mehreren potentiell gefährlichen Objekte (230) in der Erfassungsregion (40) hiervon,

(c) Berechnen eines Lenkmoments, das benötigt wird, zum Lenken des Fahrzeugs (20) in einer Richtung aufgebracht zu werden, um die gefährlichen Objekte zu meiden,

(d) Erhalten eines maximalen Moments, das verfügbar ist, um das Fahrzeug (20) in die Richtung zu lenken,

(e) Vergleichen des für das maximal verfügbare Moment repräsentativen Werts mit dem für das zum Meiden des gefährlichen Objekts benötigte Lenkmoment repräsentativen Wert,

(f) und Entscheiden, wie in Antwort auf den Vergleich einzugreifen ist.

**23.** Verfahren gemäß Anspruch 22, bei dem das Lenksicherheitssystem kein Lenkmoment aufbringt, falls das benötigte Lenkmoment das zum Meiden des gefährlichen Objekts verfügbare maximale Moment übersteigt.

**24.** Verfahren gemäß Anspruch 22 oder 23, bei dem das Lenksicherheitsystem einen für ein Verhältnis des benötigten Lenkmoments zum maximal verfügbaren Moment repräsentativen Verhältniswert berechnet.

**25.** Verfahren gemäß Anspruch 24, bei dem das Lenksicherheitssystem kein Lenkmoment aufbringt, falls sich der Verhältniswert unterhalb eines ersten Schwellwerts befindet.

**26.** Verfahren gemäß Anspruch 25, bei dem das Lenksicherheitsystem eingreift, falls sich der Verhältniswert oberhalb des ersten Schwellwerts befindet.

**27.** Verfahren gemäß Anspruch 26, bei dem das Lenksicherheitssystem durch Aufbringen eines Lenkmoments eingreift, um gefährliche Objekte zu meiden.

**28.** Verfahren gemäß einem der Ansprüche 22-27, weiter aufweisend den Verfahrensschritt: Berechnen hiervon einer relativ sichersten Richtung ($F_{lane}$) (300), in der sich das Fahrzeug (20) im Betrieb mit minimalem Kollisionsrisiko bewegen kann.

**29.** Verfahren gemäß Anspruch 28, weiter aufweisend den Schritt: Berechnen, ob einzugreifen ist oder nicht, um ein Lenkmoment aufzubringen, um das Fahrzeug (20) in Antwort auf den Verhältniswert in die sicherste Richtung ($F_{lane}$) (300) zu lenken.

**30.** Verfahren gemäß Anspruch 29, bei dem das Verfahren einen Schritt aufweist:

(g) Berechnen einer zukünftigen Verfügbarkeit der sichersten Richtung ($F_{lane}$) (300) in der Verarbeitungsanlage (60) unter Berücksichtigung von Trajektorien des einen oder der mehreren potentiell gefährlichen Objekte (230), die potentiell die sicherste Richtung ($F_{lane}$) (300) behindern können, und Aufbringen einer Lenkkraft über die Lenkanordnung (70) beim potentiellen Kollisionsfall, um eine Bewegungsrichtung des Fahrzeugs (20) in Richtung eines Abschnitts der sichersten Richtung ($F_{lane}$) (300) zu lenken, die durch das eine oder die mehreren potentiell gefährlichen Objekte (230) potentiell nicht behindert wird.

**31.** Verfahren gemäß Anspruch 30, bei der Verfahrensschritt (a) die Schritte aufweist:

(h) Emittieren einer Strahlung von einer ersten Sensorbaugruppe der Sensoranlage (30) in Richtung der Erfassungsregion (40), und Empfangen entsprechend reflektierter Strahlung hiervon, und

(i) Abbilden der Erfassungsregion (40) von einer zweiten Sensorbaugruppe der Sensoranlage (30), und wobei das Verfahren im Schritt (b) die Schritte aufweist:

(j) Assoziieren von dem einem oder den mehreren potentiell gefährlichen Objekten (230) entsprechenden von der ersten und zweiten Sensorbaugruppe empfangenen, erfassten Signalen in der Verarbeitungsanlage (60) und Assoziieren eines Gefahrenrisikos ($K_i$) für jedes des einen oder der mehreren potentiell gefährlichen Objekte (230), und

(k) Berechnen des Abschnitts der sichersten Richtung ($F_{lane}$) (300), die potentiell nicht behindert wird, als eine Funktion der Gefahrenrisiken des einen oder der mehreren potentiell gefährlichen Objekte (230) in der Verarbeitungsanlage (60).

**32.** Verfahren gemäß Anspruch 30 oder 31, bei dem das Verfahren ein Lenken in Richtung der momentan sichersten Richtung ($F_{lane}$) bedingen kann, falls das Fahrzeug (20) durch seinen Fahrer von der sichersten Richtung ($F_{lane}$) weg in Richtung des, eine potentielle Kollisionsgefahr repräsentierenden, einen oder mehreren Objekte (230) gelenkt wird.

**33.** Verfahren gemäß einem der Ansprüche 30 bis 32, bei dem das Verfahren ein Lenken weg von der momentan sichersten Richtung ($F_{lane}$) in Richtung einer zukünftig sichersten Richtung ($F_{lane}$) bedingen kann, falls die momentan sicherste Richtung ($F_{lane}$) durch die Verarbeitungsanlage (60) bestimmt wurde, potentiell durch das eine oder die mehreren potentiell gefährlichen Objekte (230) behindert zu werden.

**34.** Softwareprodukt auf einem Datenträger, wobei das Softwareprodukt auf einer Berechnungshardware ausführbar ist, um das in einem der Ansprüche 22 bis 33 beanspruchte Verfahren zu implementieren.

**35.** Fahrzeug (20), das ein Lenksicherheitssystem (30, 60, 70) gemäß einem der Ansprüche 1 bis 21 aufweist.

## Revendications

**1.** Système de sécurité de direction (30, 60, 70), qui est à même d'appliquer un couple de torsion de direction à un aménagement de direction (70) d'une automobile (20) en réponse à un événement de type collision potentielle impliquant un ou plusieurs objets potentiellement dangereux (230) identifiés, le système (30, 60, 70) comprenant :

(a) un aménagement de capteurs (30), qui est à même d'interroger une région de détection (40) extérieure à l'automobile (20) et générer des signaux de capteurs correspondants ; et
(b) un aménagement de traitement (60), qui est à même de recevoir les signaux de capteurs et d'en tirer par calcul les positions et les vitesses relatives desdits un ou plusieurs objets potentiellement dangereux (230) dans la région de détection (40), et de calculer une valeur représentative d'un couple de torsion de direction qu'il est nécessaire d'appliquer pour diriger ladite automobile (20) dans une direction permettant d'éviter lesdits objets dangereux, de récupérer une valeur représentative d'un couple de torsion maximal disponible pour diriger ladite automobile (20) dans ladite direction, et de comparer la valeur représentative du couple de torsion maximal disponible à la valeur représentative du couple de torsion de direction pour éviter ledit objet dangereux, et pour décider comment intervenir en réponse à ladite comparaison.

**2.** Système de sécurité de direction selon la revendication 1, dans lequel ledit système de sécurité de direction est aménagé pour ne pas appliquer de couple de torsion de direction dans le cas où ledit couple de torsion de direction nécessaire dépasse ledit couple de torsion maximal disponible pour éviter ledit objet dangereux.

**3.** Système de sécurité de direction selon la revendication 1 ou 2, dans lequel ledit système de sécurité de direction est aménagé pour calculer une valeur de rapport représentative d'un rapport dudit couple de torsion de direction requis audit couple de torsion maximal disponible.

**4.** Système de sécurité de direction selon la revendication 3, dans lequel ledit système de sécurité de direction est aménagé pour ne pas appliquer de couple de torsion de direction dans le cas où ladite valeur de rapport est inférieure à une première valeur de seuil.

**5.** Système de direction selon l'une quelconque des revendications 1 à 4, dans lequel ledit système de sécurité de direction est aménagé pour intervenir dans le cas où ladite valeur de rapport est supérieure à une première valeur de seuil.

**6.** Système de sécurité de direction selon la revendication 5, dans lequel ledit système de sécurité de direction est aménagé pour intervenir en appliquant un couple de torsion de direction afin d'éviter lesdits objets dangereux.

**7.** Système de sécurité de direction selon l'une quelconque des revendications 1 à 6, dans lequel ledit système de sécurité de direction est aménagé pour en tirer par calcul une direction relativement la plus sûre ($F_{voie}$) (300) le long

de laquelle l'automobile (20) est capable de se déplacer en cours d'utilisation pour essayer d'éviter lesdits un ou plusieurs objets potentiellement dangereux (230).

8. Système de sécurité de direction (30, 60, 70) selon la revendication 7, dans lequel l'aménagement de traitement (60) est à même de calculer de futures trajectoires du ou des objets dangereux (230) obstruant potentiellement ladite direction la plus sûre ($F_{voie}$) (300), l'aménagement de traitement (60) étant à même d'appliquer, via l'aménagement de direction (70), le couple de torsion de direction dans le cas d'une collision potentielle pour guider une direction de déplacement de l'automobile (20) vers la direction la plus sûre ($F_{voie}$).

9. Système de sécurité de direction (30, 60, 70) selon la revendication 7 ou 8, dans lequel l'aménagement de capteur (30) comprend un premier assemblage de capteur pour émettre un rayonnement vers la région de détection (40) et en recevoir un rayonnement réfléchi correspondant, et un second assemblage de capteur qui est à même de représenter par une image la région de détection (40), l'aménagement de traitement (60) étant à même d'associer les signaux captés correspondants aux un ou plusieurs objets potentiellement dangereux (230) reçu(s) des premier et second assemblages de capteurs et d'associer un risque de danger pour chacun du ou des objets potentiellement dangereux (230), dans lequel l'aménagement de traitement (60) est à même de calculer une partie de la direction la plus sûre ($F_{voie}$) (300), qui est potentiellement non obstrué en fonction des risques de danger du ou des objets potentiellement dangereux (230).

10. Système de sécurité de direction (30, 60, 70) selon la revendication 7, 8 ou 9, dans lequel le système (30, 60, 70) peut opérer lorsque l'automobile (20) se déplace à une vitesse supérieure à une première vitesse de seuil.

11. Système de sécurité de direction (30, 60, 70) selon la revendication 7, 8, 9 ou 10, dans lequel le système (30, 60, 70) est désactivé lorsque l'automobile (20) se déplace à une vitesse supérieure à une seconde vitesse de seuil, ladite seconde vitesse de seuil étant supérieure à ladite première vitesse de seuil.

12. Système de sécurité de direction (30, 60, 70) selon l'une quelconque des revendications précédentes, dans lequel l'intervention du système (30, 60, 70) est bloquée lorsque le couple de torsion disponible est inférieur au couple de torsion requis.

13. Système de sécurité de direction (30, 60, 70) selon l'une quelconque des revendications précédentes, dans lequel l'intervention du système (30, 60, 70) est bloquée lorsque le couple de torsion requis est inférieur à un premier seuil de couple de torsion.

14. Système de sécurité de direction (30, 60, 70) selon l'une quelconque des revendications précédentes, dans lequel le système (30, 60, 70) est à même d'intervenir lorsque le couple de torsion requis se situe dans une plage d'un seuil de couple de torsion inférieur à un seuil de couple de torsion supérieur.

15. Système de sécurité de direction (30, 60, 70) selon l'une quelconque des revendications précédentes, dans lequel l'aménagement de traitement (60) est à même de limiter la force de direction à une limite supérieure, ladite limite supérieure étant inférieure à un couple de torsion applicable par un conducteur de l'automobile (20) de sorte que le conducteur soit capable d'annuler le couple de torsion de direction appliqué par le système (30, 60, 70) lorsqu'il est en service.

16. Système de sécurité de direction (30, 60, 70) selon l'une quelconque des revendications précédentes, dans lequel on empêche le système (30, 60, 70) d'intervenir lorsque lesdits un ou plusieurs objets potentiellement dangereux (230) sont à une distance inférieure à une premier distance de seuil ($d_{R2}$) de l'automobile (20).

17. Système de sécurité de direction (30, 60, 70) selon l'une quelconque des revendications précédentes, dans lequel le système de direction (30, 60, 70) est à même de permettre un freinage automatique pour amortir une collision ou l'éviter lorsque lesdits un ou plusieurs objets potentiellement dangereux (230) sont à une distance inférieure à une seconde distance de seuil ($d_{R1}$) de l'automobile (20).

18. Système de sécurité de direction (30, 60, 70) selon la revendication 11, dans lequel les signaux de capteurs pour assurer le freinage automatique sont fournis par l'aménagement de capteurs (30).

19. Système de sécurité de direction (30, 60, 70) selon les revendications 16 et 17, dans lequel la seconde distance de seuil ($d_{R1}$) est inférieure à la première distance de seuil ($d_{R2}$).

**20.** Système de sécurité de direction (30, 60, 70) selon l'une quelconque des revendications précédentes, dans lequel le système (30, 60, 70) est à même de diriger (800) vers la présente direction la plus sûre ($F_{voie}$) (790) au cas où l'automobile (20) est dirigée (780) par son conducteur hors de la direction la plus sûre ($F_{voie}$) (790) vers un ou plusieurs objets (760) représentant un danger de collision potentielle.

**21.** Système de sécurité de direction (30, 60, 70) selon l'une quelconque des revendications précédentes, dans lequel le système (30, 60, 70) est à même de diriger (1550) hors de la présente direction la plus sûre ($F_{voie}$) (1510) vers une future direction plus sûre ($F_{voie}$) (1500) au cas où la présente direction la plus sûre (1510) est déterminée par l'aménagement de traitement (60) comme étant potentiellement obstruée par les un ou plusieurs objets potentiellement dangereux (1540).

**22.** Procédé d'application dans un système de sécurité de direction (30, 60, 70) d'un couple de torsion de direction à un aménagement de direction (70) d'une automobile (20) en réponse à un événement de type collision potentielle impliquant un ou plusieurs objets potentiellement dangereux (230) identifiés, le procédé comprenant les étapes consistant à :

(a) interroger, en utilisant un aménagement de capteurs (30), une région de détection (40) extérieure à l'automobile (20) et générant des signaux de capteurs correspondants ;
(b) recevoir dans un aménagement de traitement (60) les signaux de capteurs et en tirer par calcul les positions et les vitesses relatives d'un ou plusieurs objets potentiellement dangereux (230) dans la région de détection (40) ;
(c) calculer un couple de torsion de direction qu'il faut appliquer pour diriger ladite automobile (20) dans une direction permettant d'éviter lesdits objets dangereux ;
(d) récupérer un couple de torsion maximal disponible pour diriger ladite automobile (20) dans ladite direction ;
(e) comparer la valeur représentative du couple de torsion maximal disponible à la valeur représentative du couple de torsion de direction requis pour éviter ledit objet dangereux, et
(f) et décider comment intervenir en réponse à ladite comparaison.

**23.** Procédé selon la revendication 22, dans lequel ledit système de sécurité de direction n'applique pas de couple de torsion de direction au cas où ledit couple de torsion de direction requis dépasse ledit couple de torsion maximal disponible pour éviter ledit objet dangereux.

**24.** Procédé selon la revendication 22 ou 23, dans lequel ladite sécurité de direction calcule une valeur de rapport représentative d'un rapport dudit couple de torsion requis audit couple de torsion maximal disponible.

**25.** Procédé selon la revendication 24, dans lequel ledit système de sécurité de direction n'applique pas de couple de torsion de direction dans le cas où ladite valeur de rapport est inférieure à une première valeur de seuil.

**26.** Procédé selon la revendication 25, dans lequel ledit système de sécurité de direction intervient dans le cas où ladite valeur de rapport est supérieure à une première valeur de seuil.

**27.** Procédé selon la revendication 26, dans lequel ledit système de sécurité de direction intervient en appliquant un couple de torsion de direction pour éviter lesdits objets dangereux.

**28.** Procédé selon l'une quelconque des revendications 22 à 27, comprenant en outre l'étape du procédé permettant de tirer par calcul une direction relativement la plus sûre ($F_{voie}$) (300) dans laquelle l'automobile (20) est capable de se déplacer en fonctionnement avec un risque minimal de collision.

**29.** Procédé selon la revendication 28, comprenant en outre l'étape de procédé consistant à calculer s'il faut ou non intervenir pour appliquer le couple de torsion de direction pour diriger ladite automobile (20) dans ladite direction la plus sûre ($F_{voie}$) (300) en réponse à ladite valeur de rapport.

**30.** Procédé selon la revendication 29, dans lequel ledit procédé comprend une étape consistant à :

(g) calculer dans l'aménagement de traitement (60) la future disponibilité de ladite direction la plus sûre ($F_{voie}$) (300) en tenant compte de trajectoires des un ou plusieurs objets potentiellement dangereux (230) obstruant potentiellement la direction la plus sûre ($F_{voie}$) (300) et appliquer, via un aménagement de direction (70), une force de direction dans le cas d'une collision potentielle pour diriger l'automobile (20) dans une direction de déplacement vers une partie de la direction la plus sûre ($F_{voie}$) (300) qui est potentiellement non obstruée par le ou les objets potentiellement dangereux (230).

31. Procédé selon la revendication 30, dans lequel ledit procédé comprend à l'étape (a) les étapes consistant à :

(h) émettre à partir d'un premier assemblage de capteurs dudit aménagement de capteurs (30) un rayonnement vers la région de détection (40) et en recevoir un rayonnement réfléchi correspondant, et
(i) représenter la région de détection (40) par une image à partir d'un second assemblage de capteurs dudit aménagement de capteurs (30), et
dans lequel ledit procédé de l'étape (b) comprend les étapes consistant à :
(j) associer dans l'aménagement de traitement (60) les signaux captés correspondant auxdits un ou plusieurs objets potentiellement dangereux (230) reçus des premier et second assemblages de capteurs et associer un risque de danger ($K_i$) pour chacun du ou des objets potentiellement dangereux (230), et
(k) calculer dans l'aménagement de traitement (60) la partie de la direction la plus sûre ($F_{voie}$) (300), qui est potentiellement non obstruée en fonction des risques de danger du ou des objets potentiellement dangereux (230).

32. Procédé selon la revendication 30 ou 31, dans lequel le procédé est à même d'entraîner la direction vers la présente direction la plus sûre ($F_{voie}$) dans le cas où l'automobile (20) est dirigée par son conducteur hors de la direction la plus sûre ($F_{voie}$) vers un ou plusieurs objets (230) représentant un risque de collision potentielle.

33. Procédé selon l'une quelconque des revendications 30 à 32, dans lequel le procédé est à même d'entraîner une direction hors de la présente direction la plus sûre ($F_{voie}$) vers une future direction la plus sûre ($F_{voie}$) dans le cas où la présente direction la plus sûre ($F_{voie}$) est déterminée par l'aménagement de traitement (60) comme étant potentiellement obstruée par les un ou plusieurs objets potentiellement dangereux (230).

34. Produit logiciel sur un support de données, ledit produit logiciel pouvant être exécuté sur un matériel de calcul pour mettre en oeuvre le procédé selon l'une quelconque des revendications 22 à 33.

35. Automobile (20) comprenant un système de sécurité de direction (30, 60, 70) selon l'une quelconque des revendications 1 à 21.

FIG. 1

FIG. 2

FIG. 3

FIG. 4

710

700

20

210a

210b

# FIG. 5

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6873286 B
- US 20050090955 A
- EP 0738647 A

**Non-patent literature cited in the description**

- **BROADHURST et al.** Monte Carlo Road Safety Reasoning. Carnegie Mellon University
- **WONG, J.Y.** Theory of ground vehicles. John Wiley & Sons, Inc, 1993
- **WONG, J.Y.** Theory of ground vehicles. John Wiley & Sons, Inc, 1993